(19) Europäisches Patentamt
European Patent Office
Office européen des brevets

(11) **EP 3 800 575 B1**

(12) **EUROPEAN PATENT SPECIFICATION**

(45) Date of publication and mention
of the grant of the patent:
**17.04.2024 Bulletin 2024/16**

(51) International Patent Classification (IPC):
**G06T 7/12** (2017.01)   **G06T 7/41** (2017.01)
**G06V 10/40** (2022.01)   **G06V 10/48** (2022.01)
**G06V 20/58** (2022.01)

(21) Application number: **19825559.8**

(22) Date of filing: **28.06.2019**

(52) Cooperative Patent Classification (CPC):
**G06T 7/12; G06V 10/40; G06V 10/48; G06V 20/58;**
G06T 2207/30252

(86) International application number:
**PCT/CN2019/093771**

(87) International publication number:
**WO 2020/001631 (02.01.2020 Gazette 2020/01)**

(54) **VISUAL CAMERA-BASED METHOD FOR IDENTIFYING EDGE OF SELF-SHADOWING OBJECT, DEVICE, AND VEHICLE**

VISUELLES KAMERABASIERTES VERFAHREN ZUR IDENTIFIZIERUNG DES RANDES EINES SELBSTBESCHATTENDEN OBJEKTS, VORRICHTUNG UND FAHRZEUG

PROCÉDÉ BASÉ SUR UNE CAMÉRA VISUELLE POUR IDENTIFIER UN BORD D'OBJET À OMBRE PROPRE, DISPOSITIF ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2018 CN 201810712073**

(43) Date of publication of application:
**07.04.2021 Bulletin 2021/14**

(73) Proprietor: **Great Wall Motor Company Limited**
**Baoding, Hebei 071000 (CN)**

(72) Inventor: **MIYAHARA, Shunji**
**Baoding City, Hebei 071000 (CN)**

(74) Representative: **Loo, Chi Ching et al**
**Albright IP Limited**
**County House**
**Bayshill Road**
**Cheltenham, Gloucestershire GL50 3BA (GB)**

(56) References cited:
CN-A- 103 745 453    CN-A- 106 295 649
CN-A- 107 403 452    US-A- 5 495 536
US-A1- 2010 142 825    US-A1- 2013 083 968

- **YONG HUANG ET AL: "Real-time traffic cone detection for autonomous vehicle", 2015 34TH CHINESE CONTROL CONFERENCE (CCC), TECHNICAL COMMITTEE ON CONTROL THEORY, CHINESE ASSOCIATION OF AUTOMATION, 28 July 2015 (2015-07-28), pages 3718-3722, XP033201805, DOI: 10.1109/CHICC.2015.7260215 [retrieved on 2015-09-11]**
- **WANG J M ET AL: "Shadow detection and removal for traffic images", NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE, vol. 1, 21 March 2004 (2004-03-21), pages 649-654, XP010705648, DOI: 10.1109/ICNSC.2004.1297516 ISBN: 978-0-7803-8193-3**
- **DEZHI GAO ET AL: "Preceding Vehicles Detection Based on Vehicle Features", INTELLIGENT INFORMATION TECHNOLOGY APPLICATION, 2008. IITA '08. SECOND INTERNATIONAL SYMPOSIUM ON, IEEE, PISCATAWAY, NJ, USA, 20 December 2008 (2008-12-20), pages 408-412, XP031402190, ISBN: 978-0-7695-3497-8**

EP 3 800 575 B1

• ZHANG Jun: "Research of road identification for outdoor vision- based autonomous navigation vehicle", Master Thesis, 15 August 2007 (2007-08-15), pages 1-69, XP009525145,

**Description**

The present application claims the priority of the Chinese patent application filed on June 29th, 2018 before the Chinese Patent Office with the application number of 201810712073.1 and the title of "VISUAL CAMERA-BASED METHOD FOR IDENTIFYING EDGE OF SELF-SHADOWING OBJECT, DEVICE AND VEHICLE".

TECHNICAL FIELD

The present disclosure relates to the technical field of autopilot, and particularly relates to a method and device for edge identification of a self-shadowing object based on a visual camera and a vehicle.

BACKGROUND

ADAS (Advanced Driver Assistant Systems) can, by using various sensors installed onboard the car, in the process of the travelling of the car, sense the ambient environment at any time, collect the data, identify and track objects of different movement states, and, by using the map data of the navigator, perform systematic computation and analysis, thereby enabling the driver to be aware of the potential dangers in advance, to effectively improve the comfortableness and the safety of automobile driving. Especially in the field of autopilot, some sensors in the ADAS, such as the vision camera, have the function of obtaining two-dimensional images, similar to that of the human being, so they can serve as the main sensors in the ADAS in autopilot vehicles.

The vision camera utilizes the function of image processing to catch the road images during vehicle driving, and assists the driver in accurately identifying the road in the autopilot mode, which is an important research topic in the field of autopilot. However, regarding self-shadowing objects, because the shadow self-shielding that they generate under illumination generates boundary that prevent the objects from being identified, and the boundary varies with the direction of the illumination, that is, the boundary moves on the surface of the object, the identification of the boundaries of self-shadowing objects is very difficult.

Currently, there is no effective and systematic method for effectively identifying the boundaries of the self-shadowing image that are formed by a self-shadowing object, which affects the identification of the self-shadowing object in the self-shadowing image. YONG HUANG ET AL: "Real-time traffic cone detection for autonomous vehicle", 2015 34TH CHINESE CONTROL CONFERENCE (CCC), TECHNICAL COMMITTEE ON CONTROL THEORY, CHINESE ASSOCIATION OF AUTOMATION, 28 July 2015 (2015-07-28), pages 3718-3722, DOI: 10.1109/CHICC.2015.7260215 discloses real-time traffic cone detection for autonomous vehicle. WANG J M ET AL: "Shadow detection and removal for traffic images", NETWORKING, SENSING AND CONTROL, 2004 IEEE INTERNATIONAL CONFERENCE ON TAIPEI, TAIWAN MARCH 21-23, 2004, PISCATAWAY, NJ, USA, IEEE, vol. 1, 21 March 2004 (2004-03-21), pages 649-654, DOI: 10.1109/ICNSC.2004.1297516 ISBN 978-0-7803-8193-3 discloses shadow detection and removal for traffic images.

SUMMARY

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

To solve the above problems, the technical solutions of the present disclosure are realized as follows:

The invention is set out in the appended set of claims.

As compared with the prior art, the method for edge identification of a self-shadowing object based on a visual camera according to the present disclosure has the following advantages: by, in a process of travelling of a vehicle, acquiring image data of the object to be identified; performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels; according to the positive-direction boundary pixels and the negative-direction boundary pixels, acquiring a positive-direction straight linear segment and a negative-direction straight linear segment that represent boundary trends of the object to be identified; if the straight linear segments create a target object having a preset height, a preset width and a preset shape, determining the straight linear segments to be peripheral boundaries of the object to be identified; or else, by determining a first boundary and a second boundary, in turn determining the peripheral boundaries of the object to be identified, the method has the advantageous effect of systematic and effective boundary identification of a self-shadowing image.

The device for edge identification of a self-shadowing object based on a visual camera has the advantage over the prior art the same as that of the method for edge identification of a self-shadowing object based on a visual camera, which is not discussed here further.

BRIEF DESCRIPTION OF THE DRAWINGS

In order to more clearly illustrate the technical solutions of the embodiments of the present disclosure or the prior art, the figures that are required to describe the embodiments or the prior art will be briefly introduced below. Apparently, the figures that are described below are embodiments of the present disclosure, and a person skilled in the art can obtain other figures according to these figures without paying creative work.

Fig. 1 is a flow chart of the method for edge identification of a self-shadowing object based on a visual camera according to the first embodiment of the present disclosure;
Fig. 2 is a schematic diagram of the result of the image processing according to an embodiment of the present disclosure;
Fig. 3 is a schematic diagram of the result of the image processing according to an embodiment of the present disclosure;
Fig. 4 is a schematic diagram of the principle of the image processing according to an embodiment of the present disclosure;
Fig. 5 is a schematic diagram of the result of the image processing according to an embodiment of the present disclosure;
Fig. 6 is a schematic diagram of the principle of the image processing according to an embodiment of the present disclosure;
Fig. 7 is a schematic diagram of the result of the image processing according to an embodiment of the present disclosure;
Fig. 8 is a schematic diagram of the result of the image processing according to an embodiment of the present disclosure;
Fig. 9 is a schematic diagram of the principle of the image processing according to an embodiment of the present disclosure;
Fig. 10 is a schematic diagram of the result of the image processing according to an embodiment of the present disclosure;
Fig. 11 is a schematic diagram of the principle of the image processing according to an embodiment of the present disclosure;
Fig. 12 is a schematic diagram of the result of the image processing according to an embodiment of the present disclosure;
Fig. 13 is a schematic diagram of the result of the image processing according to an embodiment of the present disclosure;
Fig. 14 is a schematic diagram of the principle of the image processing according to an embodiment of the present disclosure;
Fig. 15 is a schematic diagram of the principle of the image processing according to an embodiment of the present disclosure;
Fig. 16 is a schematic diagram of the principle of the image processing according to an embodiment of the present disclosure;
Fig. 17 is a schematic diagram of the principle of the image processing according to an embodiment of the present disclosure;
Fig. 18 is a schematic diagram of the principle of the image processing according to an embodiment of the present disclosure;
Fig. 19 is a flow chart of the method for edge identification of a self-shadowing object based on a visual camera according to the second embodiment of the present disclosure;
Fig. 20 is a schematic diagram of the principle of the image processing according to an embodiment of the present disclosure;
Fig. 21 is a schematic diagram of the principle of the image processing according to an embodiment of the present disclosure;
Fig. 22 is a structural block diagram of the device for edge identification of a self-shadowing object based on a visual camera according to the third embodiment of the present disclosure;
Fig. 23 is a structural block diagram of the device for edge identification of a self-shadowing object based on a visual camera according to the third embodiment of the present disclosure;
Fig. 24 is a schematic structural diagram of the computer processing device according to an embodiment of the present disclosure; and

Fig. 25 is a schematic structural diagram of the storage unit according to an embodiment of the present disclosure.

DETAILED DESCRIPTION

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without departing from the scope of the appended claims fall within the protection scope of the present disclosure.

The first embodiment

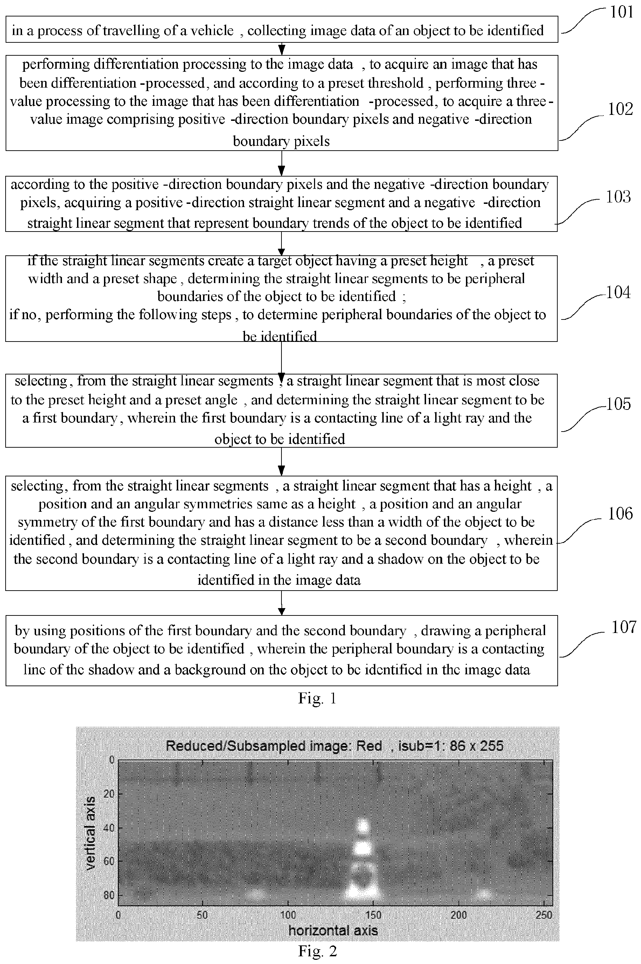

Fig. 1 is a flow chart of the method for edge identification of a self-shadowing object based on a visual camera according to an embodiment of the present disclosure, which may particularly comprise the following steps:
Step 101: in a process of travelling of a vehicle, collecting image data of an object to be identified.
In an embodiment of the present disclosure, a monocular vision system may be employed. Preferably, the vision system can acquire an image of pixels larger than 1M by using a telephoto lens.
Exemplarily, the acquired image is shown in Fig. 2. Fig. 2 may be a global image acquired from the monocular camera. In order to improve the efficiency of the image processing in the later stage, Fig. 2 may also be a sub-image containing the object to be identified that is scissored from the global image. As shown in Fig. 2, it can be observed that the boundary of the object to be identified is blurry and discontinuous.
Step 102: performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels.
In an embodiment of the present disclosure, particularly, the image processing to the image is performed by using a Sobel Filter. Fig. 2 shows a schematic diagram of the process of the image processing by using a Sobel Filter FFF.

$$\text{FFF=}\begin{bmatrix} -1 & 0 & 1 \\ -2 & 0 & 2 \\ -1 & 0 & 1 \end{bmatrix} \tag{1}$$

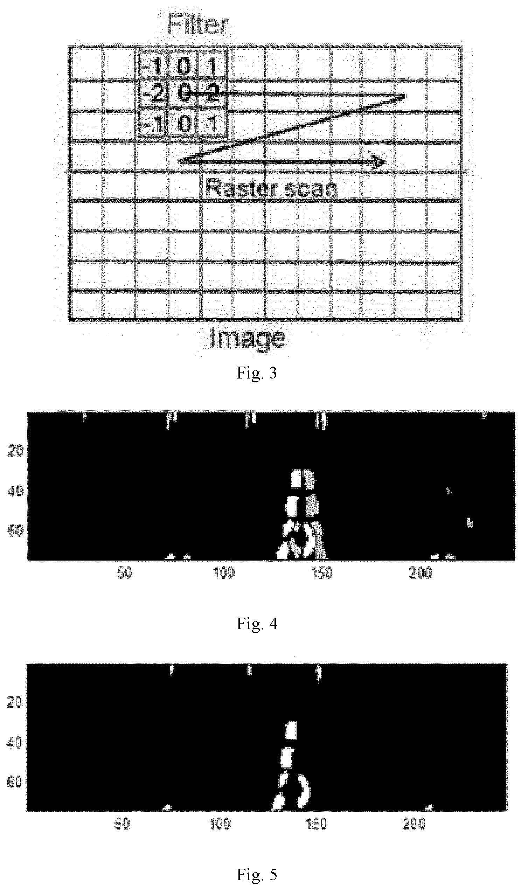

As shown in Fig. 3, a Raster Scan scans each of the pixel points in the image in the horizontal direction, and transforms the original image XXX(m,n) into a differential image YYY(m,n), which may particularly refer to the following code:

```
for m=2:mm-1
    for n=2:nn-1
        W=XXX(m-1:m+1,n-1:n+1);
        WF=W.*FFF;
        YYY(m,n)=sum(WF(:));
    end
end
```

The differential image YYY(m,n) is three-value processed. Particularly, the following three-value image TTT(m,n) code may be referred, to acquire the three-value image TTT(m,n):

```
for m=1:mm
    for n=1:nn
        TTT(m,n)=0
        if YYY(m,n)>Threshold
        TTT(m,n)=1
        else if YYY(m,n)<-Threshold
        TTT(m,n)=-1
        end
    end
end
```

By the above three-value-image processing, the values of each of the pixel points of the acquired three-value image TTT(m,n) are selected from the set [-1,0,1]. Accordingly, the pixel points in the differential image YYY(m,n) that are greater than a preset threshold *Threshold* are assigned to be 1, the pixel points in the differential image YYY(m,n) that are less than the preset threshold *Threshold* are assigned to be-1, and the remaining pixel points are assigned to be 0. Accordingly, the positive-direction boundary pixels with the value of 1 and the negative-direction boundary pixels with the value of -1 can be distinguished, and all of the other pixels than the boundary pixels are assigned to be 0.

Exemplarily, after Fig. 2 has been image-processed, the three-value image TTT(m,n) shown in Fig. 4 is acquired. The positive-direction boundary pixels and the negative-direction boundary pixels can be distinguished in the image that is acquired after the processing. As shown in Fig. 5, the positive-direction boundary pixels may be separately extracted.

Step 103: according to the positive-direction boundary pixels and the negative-direction boundary pixels, acquiring a positive-direction straight linear segment and a negative-direction straight linear segment that represent boundary trends of the object to be identified.

In the present disclosure, firstly, the positive-direction boundary pixels and the negative-direction boundary pixels are individually grouped, to respectively acquire a positive-direction-boundary-pixel group and a negative-direction-boundary-pixel group, wherein each of the positive-direction boundary pixels or the negative-direction boundary pixels is connected to the other boundary pixels in its group in the eight directions.

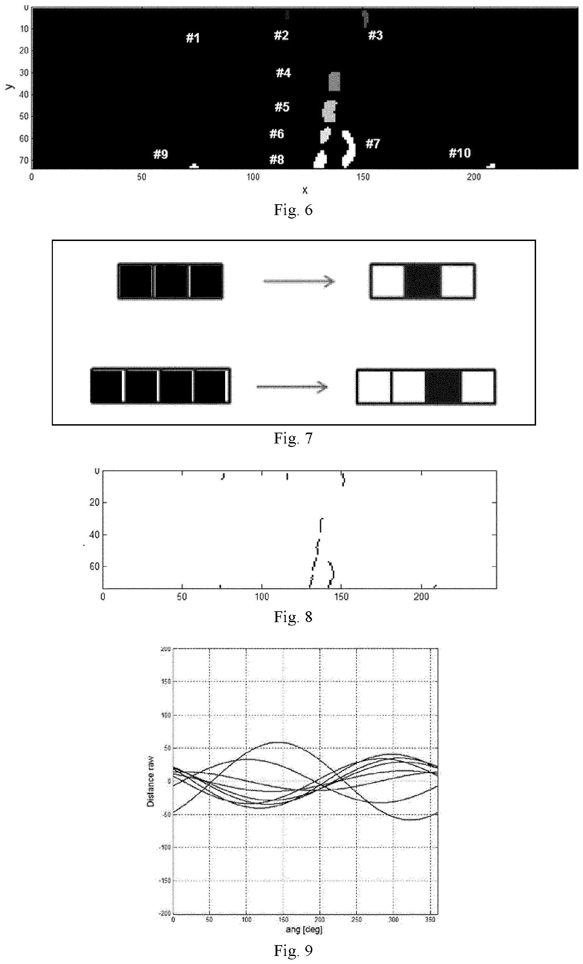

Particularly, referring to Fig. 6, Fig. 6 shows the schematic diagram of the grouping of the positive-direction-boundary-pixel group. The entire image comprises a total of 18278 pixels, among which there are 263 positive-direction boundary pixels. Besides the positive-direction boundary pixels in the image, 18015 pixels (the range of the pixel coordinates is v(1,74) h(1,247)) are the background pixels. Particularly, the data of the pixel distribution of each of the positive-direction-boundary-pixel groups are shown in Table 1.

Table 1

| Group number | Pixel quantity of each of the positive-direction-boundary-pixel groups | Range of the pixel coordinates of each of the positive-direction-boundary-pixel groups |
|---|---|---|
| #1 | 7 | v(2,5) h(75,76) |
| #2 | 8 | v(2,5) h(115,116) |
| #3 | 16 | v(2,9) h(150,152) |
| #4 | 44 | v(30,38) h(135,139) |
| #5 | 53 | v(43,52) h(132,138) |
| #6 | 27 | v(55,62) 11(131,135) |
| #7 | 61 | v(57,73) h(141,146) |
| #8 | 35 | v(66,73) h(128,133) |
| #9 | 6 | v(72,73) h(72,75) |
| #10 | 6 | v(72,73) h(206,209) |

No matter whether in the positive-direction-boundary-pixel group or the negative-direction-boundary-pixel group, the boundary pixels of each of the groups have a wide range in the horizontal direction.

Next, boundary-pixel narrowing in the horizontal direction is performed to the positive-direction-boundary-pixel group and the negative-direction-boundary-pixel group, to acquire respectively a positive-direction-narrowed-boundary-pixel group and a negative-direction-narrowed-boundary-pixel group, wherein the total quantity of the boundary pixels in the horizontal direction within each of the positive-direction-narrowed-boundary-pixel group and the negative-direction-narrowed-boundary-pixel group does not exceed a preset threshold.

As shown in Fig. 7, Fig. 7 shows the schematic diagram of the principle of the narrowing of the boundary pixels in the horizontal direction. For example, a certain row in a certain positive-direction-boundary-pixel group has 3 positive-direction boundary pixels, and in the positive-direction-narrowed-boundary-pixel group that is acquired after the narrowing of the boundary pixels, merely the pixel in the middle is reserved, and the other two pixels are assigned to be the same as the background pixels. As another example, a certain row in a certain positive-direction-boundary-pixel group has 4 positive-direction boundary pixels, and in the positive-direction-narrowed-boundary-pixel group that is acquired after the narrowing of the boundary pixels, merely the second pixel or the third pixel from left to right is reserved, and the other three pixels are assigned to be the same as the background pixels.

Exemplarily, referring to Fig. 8, Fig. 8 shows the schematic diagram of the grouping of the positive-direction-narrowed-boundary-pixel group. The entire image comprises a total of 18278 pixels, among which there are 72 narrowed positive-direction boundary pixels. Besides the positive-direction boundary pixels in the image, 18206 pixels (the range of the pixel coordinates is v(1,74) h(1,247)) are the background pixels. Particularly, the data of the pixel distribution of each of the positive-direction-narrowed-boundary-pixel groups are shown in Table 2.

Table 2

| Group number | Pixel quantity of each of the positive-direction-boundary-pixel groups | Range of the pixel coordinates of each of the positive-direction-boundary-pixel groups |
|---|---|---|
| #1 | 4 | v(2,5) h(75,76) |
| #2 | 4 | v(2,5) h(116,116) |
| #3 | 8 | v(2,9) h(151,152) |
| #4 | 9 | v(30,38) 11(137,138) |
| #5 | 10 | v(43,52) h(134,136) |
| #6 | 8 | v(55,62) h(132,134) |
| #7 | 17 | v(57,73) h(142,145) |
| #8 | 8 | v(66,73) h(130,132) |
| #9 | 2 | v(72,73) h(74,74) |
| #10 | 2 | v(72,73) h(208,209) |

After the narrowing of the boundary pixels, the quantity of the positive-direction boundary pixels that are selected is reduced from 263 shown in Fig. 6 to 72 shown in Fig. 8. The positive-direction-narrowed-boundary-pixel group reserves the boundary information in the original image, can represent the boundary trend of the object to be identified, and reduces the complexity of the subsequent image processing.

Then, Hough transformation is performed to the positive-direction-narrowed-boundary-pixel group and the negative-direction-narrowed-boundary-pixel group, to respectively acquire the positive-direction straight linear segment and the negative-direction straight linear segment.

Optionally, before Hough transformation, a plurality of ineffective groups in the positive-direction-narrowed-boundary-pixel group are eliminated whose area-position distance between the area position where it is located and an average area position of the other groups is greater than a preset distance threshold. That can reduce the subsequent computation burden, and improve the accuracy of the processing result. The preset distance threshold may be set according to the known height of the traffic cones, for example, by setting the preset distance threshold to be the known height of the traffic cones, or setting the preset distance threshold to be a multiple of the known height of the traffic cones.

Hough transformation is performed to the pixels in the positive-direction-narrowed-boundary-pixel group that has been eliminated the ineffective groups, to acquire positive-direction straight line segment that represents a boundary trend of the object to be identified. The approach of "acquiring negative-direction straight line segment that represents a boundary trend of the object to be identified" is the same as the approach of "acquiring positive-direction straight line segment that represents a boundary trend of the object to be identified", and is not discussed here in further detail.

Particularly, the process of the Hough transformation is as follows:

According to the positive-direction-narrowed-boundary-pixel group and the negative-direction-narrowed-boundary-pixel group, a positive-direction Hough curve and a negative-direction Hough curve are respectively acquired.

Taking the positive-direction-narrowed-boundary-pixel group shown in Fig. 8 as the example, each of the positive-direction boundary-pixel points (iv, ih) in the group is transformed by using the following formula, to acquire the positive-direction Hough curve (x, y) shown in Fig. 9:

$$y = -(iv - fix(MM/2));$$

% y: upward

$$x = ih - (fix(NN/2));$$

wherein MM is the maximum value of the coordinates in the vertical direction of the positive-direction boundary pixels in Fig. 8, and NN is the maximum value of the coordinates in the horizontal direction of the positive-direction boundary pixels in Fig. 8.

Histogram transformation is performed to the positive-direction Hough curve and the negative-direction Hough curve, to respectively acquire the peak-value quantity and the centroid of the positive-direction Hough curve and the peak-value quantity and the centroid of the negative-direction Hough curve.

The following program code for calculating the peak-value quantities are referred to:

```
H(1:nnR,1:nnAng): histogram is binarized.
binH(1:nnR,1:nnAng)=H*0;   % H: histogram
binH(H>=threshold)=1;      % Binary
HL=fnc_Labeling(binH);     % Labeling of binary image
nL=max(HL(:))              % number of peaks (labels)
```

The following program code for calculating the centroids are referred to:

```
rrG(1:nL);        % CG of the range for each connected region
aangG(1:nL);      % CG of the angles
rrG & aangG: nl=2
rrG: 50, 110,
aangG: 151, 31,
```

According to the peak-value quantity and the centroid of the positive-direction Hough curve, the positive-direction straight line that represents a boundary trend of the object to be identified are acquired, and, according to the peak-value quantity and the centroid of the negative-direction Hough curve, the negative-direction straight line that represents a boundary trend of the object to be identified are acquired.

The peak-value points are connected in a Hough plane, and the peak-value points that are connected to be the same one group are marked, wherein the result of the marking is shown in Table 3.

Table 3

| # 1 | number of peaks=11 | range (14, 16), ang (347, 354) |
|---|---|---|
| # 2 | number of peaks=1 | range (15, 15), ang (16, 16) |
| # 3 | number of peaks=1 | range (16, 16), ang (14, 14) |
| # 4 | number of peaks=1 | range (17, 17), ang (343, 343) |

By comparison, the group #1 comprising the largest peak-value quantity is selected. After the connection of the peak-value points, the centroid of that group is calculated. The information of the centroid of the selected group #1 in the Hough plane is as follows:

rrG & aangG: nl=1
rrG: 14,
angG: 351,

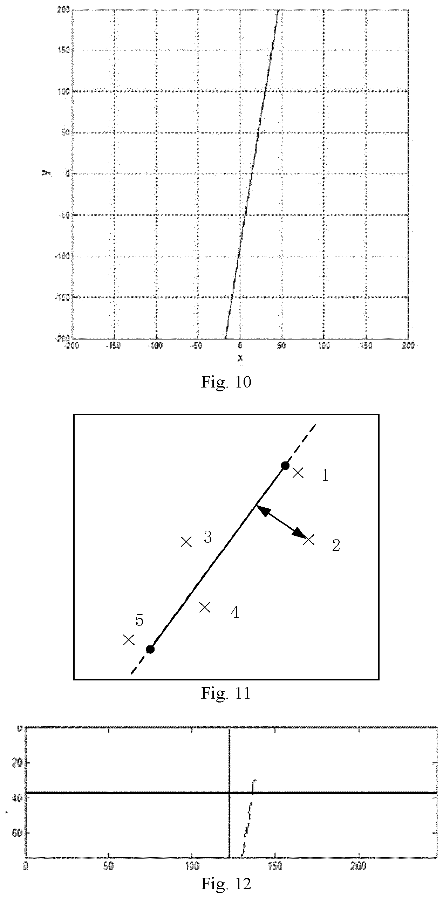

From the selected group #1, the positive-direction straight line that represents a boundary trend of the object to be identified may be directly acquired, as shown in Fig. 10.

The positive-direction boundary pixels are matched to the positive-direction straight line, to determine two endpoints in the positive-direction straight line, and the line segment between the two endpoints is the positive-direction straight linear segment.

Particularly, the process comprises: determining target positive-direction boundary pixels among the positive-direction boundary pixels whose distances from the positive-direction straight line are less than a preset distance; and according to the pixel having the maximum vertical coordinate value in the vertical direction among the target positive-direction boundary pixels, determining a first endpoint of the two endpoints, and, according to the pixel having the minimum vertical coordinate value in the vertical direction among the target positive-direction boundary pixels, determining a second endpoint of the two endpoints.

For example, as shown in Fig. 11, totally 5 pixels (1, 2, 3, 4 and 5) have the distance from the positive-direction straight line (dotted line) less than the preset distance. Accordingly, the first endpoint is determined in the positive-direction straight line by using the pixel 1 having the maximum vertical coordinate, and the second endpoint is determined in the positive-direction straight line by using the pixel 5 having the minimum vertical coordinate.

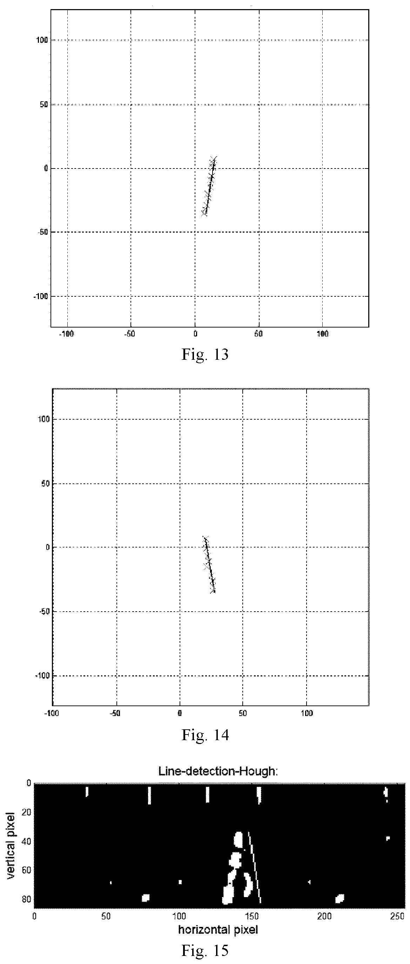

As shown in Fig. 12, Fig. 12 shows the target positive-direction boundary pixels whose distance from the positive-direction straight line shown in Fig. 10 is less than a preset distance. The positive-direction straight linear segment that is determined and acquired by using the target positive-direction boundary pixels is shown in Fig. 13.

The negative-direction boundary pixels are matched to the negative-direction straight line, to determine two endpoints in the negative-direction straight line, and the line segment between the two endpoints is the negative-direction straight linear segment.

The process of determining the negative-direction straight linear segment is similar to that of the positive-direction straight linear segment, and the acquired negative-direction straight linear segment is shown in Fig. 14, and is not discussed here further.

Step 104: if the straight linear segments create a target object having a preset height, a preset width and a preset shape, determining the straight linear segments to be peripheral boundaries of the object to be identified.

In an embodiment of the present disclosure, if the graphic object formed by the positive-direction straight linear segment and/or the negative-direction straight linear segment that are obtained above satisfies a preset height, a preset width and a preset shape, it is determined that the positive-direction straight linear segment and/or the negative-direction straight linear segment are correct peripheral boundaries for the object to be identified. As shown in Fig. 15, the object to be identified is a traffic cone, and when the self-shadowing has a small influence, the periphery of the traffic cone can be observed from the edge image; in other words, the actual peripheral surface is estimated from the edge image. In other words, if the straight linear segments that are obtained by the three-value processing meet the height and the width of the traffic cone and the shape of the corresponding construction, it can be determined that the line segments are the peripheral boundaries of the traffic cone.

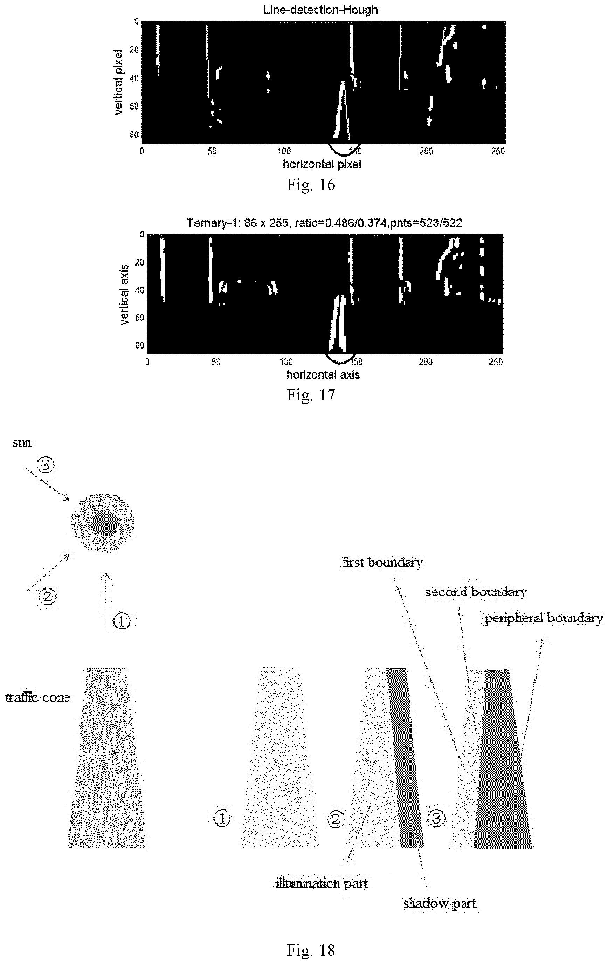

In practical applications, when a shadow exists, and the shadow has a large influence, as shown in Fig. 16, the periphery of the traffic cone cannot be properly obtained from the edge image. In Fig. 16, the observed right periphery is instead a shadow boundary. In another example of the identification of a self-shadowing traffic cone shown in Fig. 17, the right half of the traffic cone has already disappeared, and the width of the cone seems to be reduced. Therefore, the cone might probably be identified to be another object.

Accordingly, the following steps are required to be performed, to determine peripheral boundaries of the object to be identified:

Step 105: selecting, from the straight linear segments, a straight linear segment that is most close to the preset height and a preset angle, and determining the straight linear segment to be a first boundary, wherein the first boundary is a contacting line of light rays and the object to be identified.

Step 106: selecting, from the straight linear segments, a straight linear segment that has a height, a position and an angular symmetry same as a height, a position and an angular symmetry of the first boundary and has a distance less than a width of the object to be identified, and determining the straight linear segment to be a second boundary, wherein the second boundary is a contacting line of light rays and a shadow on the object to be identified in the image data.

In an embodiment of the present disclosure, as shown in Fig. 18, it is assumed that the sun illuminates from the left, while the self-shielding depends on the direction of the sun, the illuminated part and the shadowed part vary with the illumination direction. In Fig. 18, the illuminance ① is the ideal condition, wherein no shadow exists. In the illuminance ②, the right part of the traffic cone has a small area of shadow. Furthermore, in the illuminance (3), the shadow covers the entire right half of the cone and part of the left half. Those shadows make it difficult to extract the correct peripheral boundaries. In certain cases, the peripheral boundaries completely cannot be identified. Moreover, in certain other cases, the second boundary might be erroneously identified to be a peripheral boundary.

Therefore, particularly, in order to identify the correct peripheral boundaries, it is required to firstly identify the first boundary and the second boundary, wherein the first boundary is between the left background and the illuminated part, the second boundary is between the illuminated part and the shadowed part, and the peripheral boundary is between the shadowed part and the right background.

The peripheral boundary cannot be effectively identified by using the differential image, so after the positive-direction line segment and the negative-direction line segment in the object to be identified have been determined by using the three-value image, they are determined to be the first boundary and the second boundary.

Step 107: by using positions of the first boundary and the second boundary, drawing a peripheral boundary of the object to be identified, wherein the peripheral boundary is a contacting line of the shadow and a background on the object to be identified in the image data.

In an embodiment of the present disclosure, by judging whether the distance and the angle between the first boundary and the second boundary satisfy the features of the object to be identified, the positions of the peripheral boundaries are further correctly determined.

For example, the polarities of the edge linear segments are different; that is, one is a positive-direction edge and the other is a negative-direction edge. According to the direction of the illumination, it can be determined that the positive-direction edge or the negative-direction edge is the first boundary. Then, the distances between each of the boundaries and the central line of the object to be identified are determined, for example approximately 20 cm, depending on the size of the traffic cone. Then, it is determined that the sum of the angle between the first boundary and the horizontal line and the angle between the second boundary and the horizontal line is 180 degrees. If the distance between the second boundary and the central line is 20cm, it is determined that the second boundary is a peripheral boundary, and the analysis ends, or else, according to the positions of the first boundary and the second boundary, by referring to the particular parameters of the object to be identified, the correct peripheral boundaries are determined.

The second embodiment

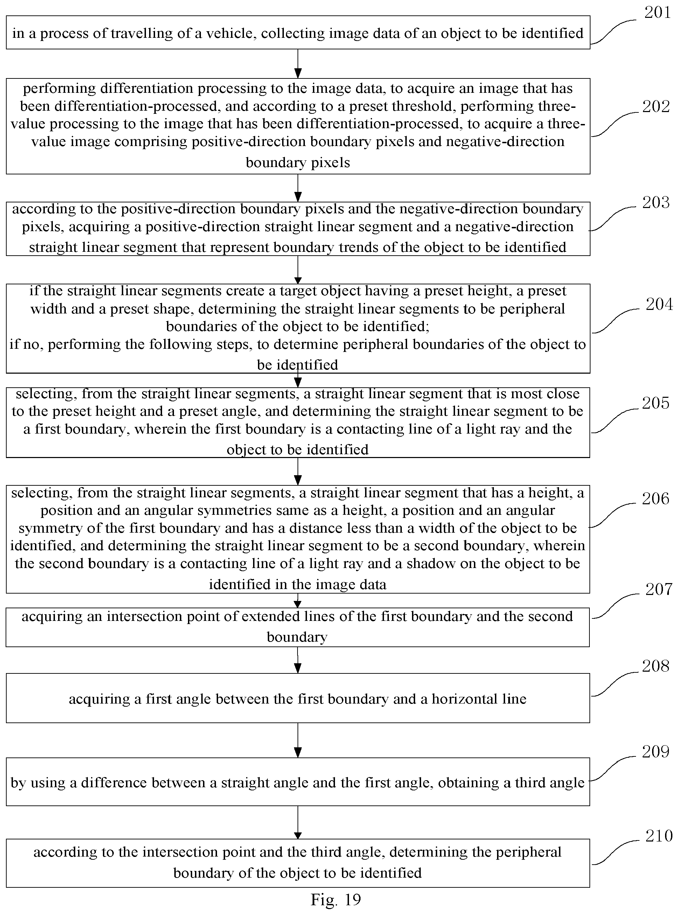

Fig. 19 is a flow chart of the method for edge identification of a self-shadowing object based on a visual camera according to an embodiment of the present disclosure, which may particularly comprise the following steps:

Step 201: in a process of travelling of a vehicle, collecting image data of an object to be identified.

This step is the same as the step 101, and is not discussed here in detail.

Step 202: performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels.

This step is the same as the step 102, and is not discussed here in detail.

Step 203: according to the positive-direction boundary pixels and the negative-direction boundary pixels, acquiring a positive-direction straight linear segment and a negative-direction straight linear segment that represent boundary trends of the object to be identified.

This step is the same as the step 103, and is not discussed here in detail.

Step 204: if the straight linear segments create a target object having a preset height, a preset width and a preset shape, determining the straight linear segments to be peripheral boundaries of the object to be identified.

This step is the same as the step 104, and is not discussed here in detail.

if no, performing the following steps, to determine peripheral boundaries of the object to be identified:

Step 205: selecting, from the straight linear segments, a straight linear segment that is most close to the preset height and a preset angle, and determining the straight linear segment to be a first boundary, wherein the first boundary is a contacting line of light rays and the object to be identified.

This step is the same as the step 105, and is not discussed here in detail.

Step 206: selecting, from the straight linear segments, a straight linear segment that has a height, a position and an angular symmetry same as a height, a position and an angular symmetry of the first boundary and has a distance less than a width of the object to be identified, and determining the straight linear segment to be a second boundary, wherein the second boundary is a contacting line of light rays and a shadow on the object to be identified in the image data.

This step is the same as the step 106, and is not discussed here in detail.

Step 207: acquiring an intersection point of extended lines of the first boundary and the second boundary.

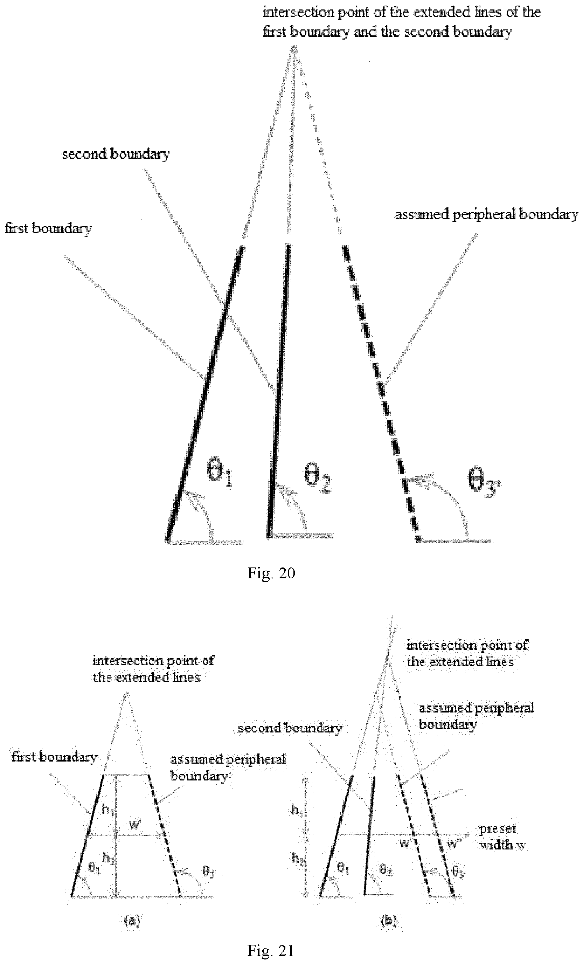

In an embodiment of the present disclosure, as shown in Fig. 20, the first boundary and the second boundary are extended upwardly to the intersection point, to determine the intersection point of the extended lines of the first boundary and the second boundary.

Step 208: acquiring a first angle between the first boundary and a horizontal line.

In an embodiment of the present disclosure, as shown in Fig. 20, the first angle $\theta_1$ between the first boundary and the horizontal line is acquired.

Step 209: by using a difference between a straight angle and the first angle, obtaining a third angle.

In an embodiment of the present disclosure, as shown in Fig. 20, assuming that the included angle between the correct peripheral boundary and the horizontal line is the third angle $\theta_3$, according to the feature of the object to be identified, the traffic cone, it can be known that $\theta_3=180-\theta_1$ .

Step 210: according to the intersection point and the third angle, determining the peripheral boundary of the object to be identified.

Preferably, the step 210 comprises substeps A1-A2:

substep A1: drawing a line segment that passes through the intersection point of the extended lines of the first boundary and the second boundary, and causing an included angle between the line segment and a horizontal line to be the third angle; and

substep A2: determining the line segment to be the peripheral boundary of the object to be identified.

In an embodiment of the present disclosure, as shown in Fig. 20, the step comprises drawing a line segment that passes through the intersection point of the extended lines of the first boundary and the second boundary, and assuming that the line segment is a peripheral boundary; moving the lower end of the assumed peripheral boundary, and causing the angle between the assumed peripheral boundary and the horizontal line to be the same as $\theta_3$; and adjusting the distance between the assumed peripheral boundary and the central point of the object to be identified to be 20cm, and adjusting the height to be similar to the height of the first boundary. Accordingly, the area constructed by using the first boundary and the assumed peripheral boundary is consistent with the identification parameters of the traffic cone, and then it can be determined that the assumed peripheral boundary is a suitable peripheral boundary.

Preferably, in another embodiment of the present disclosure,

The step 210 may further comprise substeps B1-B4:

substep B1: determining a first height value of the first boundary and a first distance between the first boundary and a predetermined central line;

substep B2: drawing a line segment that passes through the intersection point of the extended lines of the first boundary and the second boundary, and causing an included angle between the line segment and a horizontal line to be the third angle;

substep B3: moving the line segment in parallel, to cause a distance between the line segment and the predetermined central line to be equal to the first distance, and a height of the line segment to be equal to the first height value; and

substep B4: determining the line segment that has been moved in parallel to be the peripheral boundary of the object to be identified.

In an embodiment of the present disclosure, as shown in Fig. 21, firstly, to draw the assumed peripheral boundary, it is required to determine the third angle, wherein $\theta_3=180-\theta_1$. In addition, a linear segment having the same height as that of the first boundary is determined, and h1=h2. furthermore, the width w' from the linear segment to the center is the preset width of the object at the center, i.e., the preset height of the object to be identified, which, in the present embodiment, is 20cm, and the numerical value depends on the parameters of the particular object to be identified, and is not limited in the embodiments of the present disclosure.

Secondly, the intersection point of the extended lines of the first boundary and the second boundary is determined. As shown in Fig. 21, when the assumed peripheral boundary is being drawn, the assumed peripheral boundary passes through the intersection point of the extended lines, and the angle of the linear segment is determined to be $\theta_3 = 180 - \theta_1$. subsequently, according to the following formula, the preset width is calculated out, and the assumed peripheral boundary is horizontally moved, to cause the width from it to the first boundary to be W", wherein the values of a and b are preset parameters, and are usually 1.

$$W'' = (a*w'' + b*w')/(w' + w'') \qquad (2)$$

Accordingly, the height, the angle and the width from the first boundary of the assumed peripheral boundary are determined, and then it can be determined that the assumed peripheral boundary that has been moved is a suitable peripheral boundary.

Preferably, in another embodiment of the present disclosure,
Before the substep A2 or B4, the step may further comprise: substeps C1-C2:

substep C1: judging whether a texture difference between a shadow area on the object to be identified and a natural-background area on the object to be identified that are separated by the line segment that has been moved in parallel exceeds a preset threshold; and
substep C2: if the texture difference exceeds the preset threshold, entering the substep A2 or B4, or else re-entering the step 204.

In an embodiment of the present disclosure, in order to verify the above determination, the texture difference between the two areas separated by the assumed peripheral boundary is investigated, the assumed peripheral boundary is horizontally moved to study the texture difference between the two areas separated by it, and the new boundary that has the maximum texture difference is determined to be a peripheral boundary having a correct boundary. If the maximum difference is greater than a preset threshold, the assumed peripheral boundary is determined to be a suitable peripheral boundary.

If, in the detection process, in the process of translating the assumed peripheral boundary, the texture difference between the two areas separated by it is less than the preset threshold, the step 204 is re-entered.

Preferably, in another embodiment of the present disclosure,
Before the substep A2 or B4, the step may further comprise: substeps D1-D2:

substep D1: by moving in parallel the line segment that has been moved in parallel, judging a maximum value of a texture difference between a shadow area on the object to be identified and a natural-background area on the object to be identified that are separated by the line segment that has been moved in parallel; and
substep D2: if the maximum value of the texture difference is greater than a preset threshold, entering the substep A2 or B4, or else re-entering the step 204.

In an embodiment of the present disclosure, in order to verify the above determination, by using the horizontal line as the axis, the assumed peripheral boundary is horizontally moved, and the texture difference between the two areas separated by the assumed peripheral boundary is detected, to find the new boundary that has the maximum texture difference, which is determined to be a peripheral boundary having a correct boundary. If the maximum difference is greater than a preset threshold, the assumed peripheral boundary is determined to be a suitable peripheral boundary.

Particularly, as the clear peripheral line (the first boundary) and the extended line of the shadow boundary (the second boundary) are used to estimate the intersection point, and by starting from the intersection point, the linear segment of the assumed peripheral boundary that has the angle symmetrical with the first boundary is created, and then, after the linear segment has been moved in parallel, the textures on the two sides of the linear segment are judged, when the texture difference is larger, the estimation on the blur peripheral line is more reliable.

If, in the detection process, in the process of translating the assumed peripheral boundary, the texture difference between the two areas separated by it is less than the preset threshold, the step 204 is re-entered.

The third embodiment

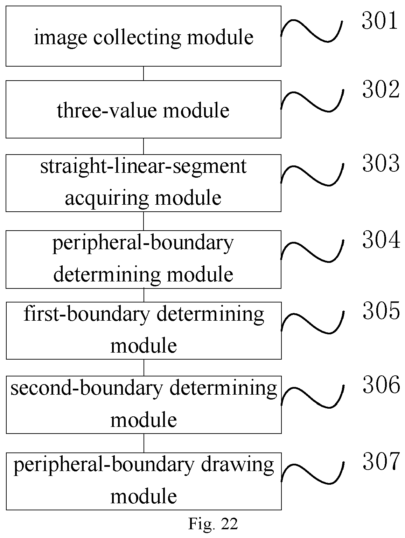

Fig. 22 is a structural block diagram of the device for edge identification of a self-shadowing object based on a visual camera according to an embodiment of the present disclosure. The device comprises:

an image collecting module 301 configured for, in a process of travelling of a vehicle, collecting image data of an object to be identified;

a three-value module 302 configured for performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels;

a straight-linear-segment acquiring module 303 configured for, according to the positive-direction boundary pixels and the negative-direction boundary pixels, acquiring a positive-direction straight linear segment and a negative-direction straight linear segment that represent boundary trends of the object to be identified;

a peripheral-boundary determining module 304 configured for, if the straight linear segments create a target object having a preset height, a preset width and a preset shape, determining the straight linear segments to be peripheral boundaries of the object to be identified; and

if no, by executing the following modules, determining peripheral boundaries of the object to be identified:

a first-boundary determining module 305 configured for selecting, from the straight linear segments, a straight linear segment that is most close to the preset height and a preset angle, and determining the straight linear segment to be a first boundary, wherein the first boundary is a contacting line of light rays and the object to be identified;

a second-boundary determining module 306 configured for selecting, from the straight linear segments, a straight linear segment that has a height, a position and an angular symmetry same as a height, a position and an angular symmetry of the first boundary and has a distance less than a width of the object to be identified, and determining the straight linear segment to be a second boundary, wherein the second boundary is a contacting line of light rays and a shadow on the object to be identified in the image data; and

a peripheral-boundary drawing module 307 configured for, by using positions of the first boundary and the second boundary, drawing a peripheral boundary of the object to be identified, wherein the peripheral boundary is a contacting line of the shadow and a background on the object to be identified in the image data.

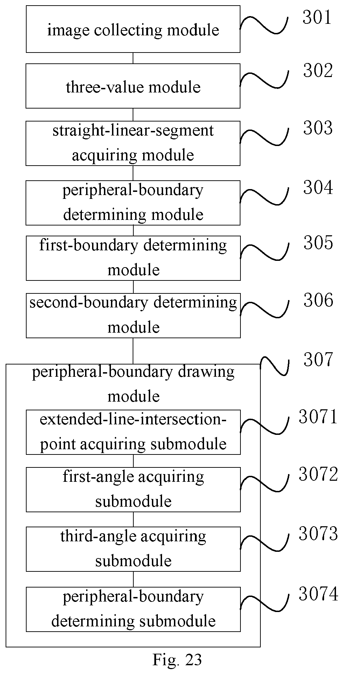

Fig. 23 is a structural block diagram of the device for edge identification of a self-shadowing object based on a visual camera according to an embodiment of the present disclosure. The device comprises:

an image collecting module 301 configured for, in a process of travelling of a vehicle, collecting image data of an object to be identified;

a three-value module 302 configured for performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels;

a straight-linear-segment acquiring module 303 configured for, according to the positive-direction boundary pixels and the negative-direction boundary pixels, acquiring a positive-direction straight linear segment and a negative-direction straight linear segment that represent boundary trends of the object to be identified;

a peripheral-boundary determining module 304 configured for, if the straight linear segments create a target object having a preset height, a preset width and a preset shape, determining the straight linear segments to be peripheral boundaries of the object to be identified; and

if no, by executing the following modules, determining peripheral boundaries of the object to be identified:

a first-boundary determining module 305 configured for selecting, from the straight linear segments, a straight linear segment that is most close to the preset height and a preset angle, and determining the straight linear segment to be a first boundary, wherein the first boundary is a contacting line of light rays and the object to be identified;

a second-boundary determining module 306 configured for selecting, from the straight linear segments, a straight linear segment that has a height, a position and angular symmetry same as a height, a position and an angular symmetry of the first boundary and has a distance less than a width of the object to be identified, and determining the straight linear segment to be a second boundary, wherein the second boundary is a contacting line of light rays and a shadow on the object to be identified in the image data; and

a peripheral-boundary drawing module 307 configured for, by using positions of the first boundary and the second boundary, drawing a peripheral boundary of the object to be identified, wherein the peripheral boundary is a contacting line of the shadow and a background on the object to be identified in the image data.

Preferably, the peripheral-boundary drawing module 307 comprises:

an extended-line-intersection-point acquiring submodule 3071 configured for acquiring an intersection point of extended lines of the first boundary and the second boundary;

a first-angle acquiring submodule 3072 configured for acquiring a first angle between the first boundary and a horizontal line;

a third-angle acquiring submodule 3073 configured for, by using a difference between a straight angle and the first angle, obtaining a third angle; and

a peripheral-boundary determining submodule 3074 configured for, according to the intersection point and the third angle, determining the peripheral boundary of the object to be identified.

Preferably, the peripheral-boundary determining submodule 3074 comprises:

a line-segment drawing unit configured for drawing a line segment that passes through the intersection point of the extended lines of the first boundary and the second boundary, and causing an included angle between the line segment and a horizontal line to be the third angle; and

a peripheral-boundary determining unit configured for determining the line segment to be the peripheral boundary of the object to be identified.

Preferably, the peripheral-boundary determining submodule 3074 may further comprise:

a first-distance determining unit configured for determining a first height value of the first boundary and a first distance between the first boundary and a predetermined central line;

a line-segment-included-angle determining unit configured for drawing a line segment that passes through the intersection point of the extended lines of the first boundary and the second boundary, and causing an included angle between the line segment and a horizontal line to be the third angle;

a line-segment translating unit configured for moving the line segment in parallel, to cause a distance between the line segment and the predetermined central line to be equal to the first distance, and a height of the line segment to be equal to the first height value; and

a peripheral-boundary drawing module configured for determining the line segment that has been moved in parallel to be the peripheral boundary of the object to be identified.

Preferably, the peripheral-boundary determining submodule 3074 further comprises:

a judging unit configured for judging whether a texture difference between a shadow area on the object to be identified and a natural-background area on the object to be identified that are separated by the line segment that has been moved in parallel exceeds a preset threshold; and

a determining unit configured for, if the texture difference exceeds the preset threshold, executing the peripheral-boundary determining unit, and if no, re-executing the peripheral-boundary drawing module.

Preferably, the peripheral-boundary determining submodule 3074 further comprises:

a texture-difference-maximum-value determining unit configured for, by moving in parallel the line segment that has been moved in parallel, judging a maximum value of a texture difference between a shadow area on the object to be identified and a natural-background area on the object to be identified that are separated by the line segment that has been moved in parallel; and

an executing unit configured for, if the maximum value of the texture difference is greater than a preset threshold, executing the line-segment translating unit, and if no, re-executing the peripheral-boundary drawing module.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Part or all of the modules may be selected according to the actual demands to realize the purposes of the solutions of the embodiments. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the calculating and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

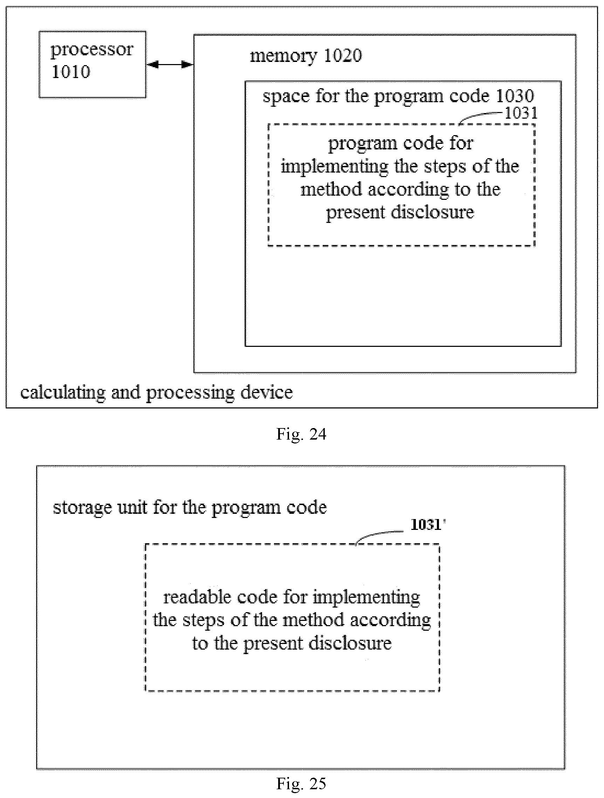

For example, Fig. 24 shows a calculating and processing device that can implement the method according to the present disclosure. The calculating and processing device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as hard disk, compact disk (CD), memory card or floppy disk as shown in Fig. 25. Such computer program products are usually portable or fixed storage units. The storage unit may have storage segments or storage spaces with similar arrangement to the memory 1020 of the calculating and processing device in Figure 24. The program codes may for example be compressed in a suitable form. Generally, the storage unit contains a computer-readable code 1031', which can be read by a processor like 1010. When those codes are executed by the calculating and processing device, the codes cause the calculating and processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details, as long as they do not depart from the scope of the appended claims.

In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

Finally, it should be noted that the above embodiments are merely intended to explain the technical solutions of the present disclosure, and not to limit them. Although the present disclosure is explained in detail by referring to the above embodiments, a person skilled in the art should understand that he can still modify the technical solutions set forth by the above embodiments, or make equivalent substitutions to part of the technical features of them, as long as those modifications or substitutions do not depart from the scope of the appended claims.

## Claims

1. A method for edge identification of a self-shadowing object based on a visual camera, wherein the method comprises:

   in a process of travelling of a vehicle, collecting image data of an object to be identified (101), wherein the object to be identified is a traffic cone;
   performing differentiation processing to the image data, to acquire an image that has been differentiation-processed, wherein the differentiation processing to the image data is performed by using a Sobel Filter, and according to a preset threshold, performing three-value processing to the image that has been differentiation-processed, to acquire a three-value image comprising positive-direction boundary pixels and negative-direction boundary pixels (102), wherein by the three-value processing, values of each of pixel points of the acquired three-value image are selected from a set [-1,0,1], and wherein the positive-direction boundary pixels refer to pixel points in the image that has been differentiation-processed that are greater than a preset threshold and are assigned to be 1, and the negative-direction boundary pixels refer to pixel points in the image that has been differentiation-processed that are less than the preset threshold and are assigned to be -1;
   according to the positive-direction boundary pixels and the negative-direction boundary pixels, acquiring a positive-direction straight linear segment and a negative-direction straight linear segment that represent boundary trends of the object to be identified (103), wherein the step of, according to the positive-direction boundary pixels and the negative-direction boundary pixels, acquiring the positive-direction straight linear segment and the negative-direction straight linear segment that represent the boundary trends of the object to be identified (103) comprises individually grouping the positive-direction boundary pixels and the negative-direction boundary pixels, to respectively acquire a positive-direction-boundary-pixel group and a negative-direction-boundary-pixel group, wherein each of the positive-direction boundary pixels or the negative-direction boundary pixels is connected to the other boundary pixels in its group in eight directions; performing boundary-pixel narrowing in a horizontal direction to the positive-direction-boundary-pixel group and the negative-direction-boundary-pixel group, to acquire respectively a positive-direction-narrowed-boundary-pixel group and a negative-direction-narrowed-boundary-pixel group, wherein a total quantity of the boundary pixels in the horizontal direction within each of the positive-direction-narrowed-boundary-pixel group and the negative-direction-narrowed-boundary-pixel group does not exceed a preset threshold; and performing Hough transformation to the positive-direction-narrowed-boundary-pixel group and the negative-direction-narrowed-boundary-pixel group, to respectively acquire the positive-direction straight linear segment and the negative-direction straight linear segment;

if the positive-direction straight linear segment and/or the negative-direction straight linear segment create a target object having a preset height, a preset width and a preset shape, determining the positive-direction straight linear segment and/or the negative-direction straight linear segment to be peripheral boundaries of the object to be identified; and

if no, performing the following steps, to determine peripheral boundaries of the object to be identified (104):

selecting, from the straight linear segments, a straight linear segment that is most close to the preset height and a preset angle, and determining the straight linear segment to be a first boundary, wherein the first boundary is a contacting line of light rays and the object to be identified (105);

selecting, from the straight linear segments, a straight linear segment that has a height, a position and an angular symmetry same as a height, a position and an angular symmetry of the first boundary and has a distance from the first boundary less than a width of the object to be identified, and determining the straight linear segment to be a second boundary, wherein the second boundary is a contacting line of light rays and a shadow on the object to be identified in the image data (106); and

by using positions of the first boundary and the second boundary, drawing a peripheral boundary of the object to be identified, wherein the peripheral boundary is a contacting line of the shadow and a background on the object to be identified in the image data (107).

2. The method according to claim 1, wherein the step of, by using the positions of the first boundary and the second boundary, drawing the peripheral boundary of the object to be identified comprises:

acquiring an intersection point of extended lines of the first boundary and the second boundary (207);

acquiring a first angle between the first boundary and a horizontal line (208);

by using a difference between a straight angle and the first angle, obtaining a third angle (209); and

according to the intersection point and the third angle, determining the peripheral boundary of the object to be identified (210).

3. The method according to claim 2, wherein the step of, according to the intersection point and the third angle, determining the peripheral boundary of the object to be identified (210) comprises:

drawing a line segment that passes through the intersection point of the extended lines of the first boundary and the second boundary, and causing an included angle between the line segment and a horizontal line to be the third angle; and

determining the line segment to be the peripheral boundary of the object to be identified.

4. The method according to claim 2, wherein the step of, according to the intersection point and the third angle, determining the peripheral boundary of the object to be identified (210) comprises:

determining a first height value of the first boundary and a first distance between the first boundary and a predetermined central line;

drawing a line segment that passes through the intersection point of the extended lines of the first boundary and the second boundary, and causing an included angle between the line segment and a horizontal line to be the third angle;

moving the line segment in parallel, to cause a distance between the line segment and the predetermined central line to be equal to the first distance, and a height of the line segment to be equal to the first height value; and determining the line segment that has been moved in parallel to be the peripheral boundary of the object to be identified.

5. The method according to claim 3 or 4, wherein before the step of determining the line segment that has been moved in parallel to be the peripheral boundary of the object to be identified, the method further comprises:

   judging whether a texture difference between a shadow area on the object to be identified and a natural-background area on the object to be identified that are separated by the line segment that has been moved in parallel exceeds a preset threshold; and
   if the texture difference exceeds the preset threshold, entering the step of determining the line segment that has been moved in parallel to be the peripheral boundary of the object to be identified, and if no, re-entering the step of determining the peripheral boundary of the object to be identified.

6. The method according to claim 3 or 4, wherein before the step of determining the line segment that has been moved in parallel to be the peripheral boundary of the object to be identified, the method further comprises:

   by moving in parallel the line segment that has been moved in parallel, judging a maximum value of a texture difference between a shadow area on the object to be identified and a natural-background area on the object to be identified that are separated by the line segment that has been moved in parallel; and
   if the maximum value of the texture difference is greater than a preset threshold, entering the step of determining the line segment that has been moved in parallel to be the peripheral boundary of the object to be identified, and if no, re-entering the step of determining the peripheral boundary of the object to be identified.

7. A device for edge identification of a self-shadowing object based on a visual camera, wherein the device comprises:

   an image collecting module (301) configured for, in a process of travelling of a vehicle, collecting image data of an object to be identified (101), wherein the object to be identified is a traffic cone;
   a three-value module (302) configured for performing differentiation processing to the image data, to acquire an image that has been differentiation-processed, wherein the differentiation processing to the image data is performed by using a Sobel Filter, and according to a preset threshold, performing three-value processing to the image that has been differentiation-processed, to acquire a three-value image comprising positive-direction boundary pixels and negative-direction boundary pixels (102), wherein by the three-value processing, values of each of pixel points of the acquired three-value image are selected from a set [-1,0,1], and wherein the positive-direction boundary pixels refer to pixel points in the image that has been differentiation-processed that are greater than a preset threshold and are assigned to be 1, and the negative-direction boundary pixels refer to pixel points in the image that has been differentiation-processed that are less than the preset threshold and are assigned to be -1;
   a straight-linear-segment acquiring module (303) configured for, according to the positive-direction boundary pixels and the negative-direction boundary pixels, acquiring a positive-direction straight linear segment and a negative-direction straight linear segment that represent boundary trends of the object to be identified (103), wherein the operation of, according to the positive-direction boundary pixels and the negative-direction boundary pixels, acquiring the positive-direction straight linear segment and the negative-direction straight linear segment that represent the boundary trends of the object to be identified (103) comprises individually grouping the positive-direction boundary pixels and the negative-direction boundary pixels, to respectively acquire a positive-direction-boundary-pixel group and a negative-direction-boundary-pixel group, wherein each of the positive-direction boundary pixels or the negative-direction boundary pixels is connected to the other boundary pixels in its group in eight directions; performing boundary-pixel narrowing in a horizontal direction to the positive-direction-boundary-pixel group and the negative-direction-boundary-pixel group, to acquire respectively a positive-direction-narrowed-boundary-pixel group and a negative-direction-narrowed-boundary-pixel group, wherein a total quantity of the boundary pixels in the horizontal direction within each of the positive-direction-narrowed-boundary-pixel group and the negative-direction-narrowed-boundary-pixel group does not exceed a preset threshold; and performing Hough transformation to the positive-direction-narrowed-boundary-pixel group and the negative-direction-narrowed-boundary-pixel group, to respectively acquire the positive-direction straight linear segment and the negative-direction straight linear segment;
   a peripheral-boundary determining module (304) configured for, if the positive-direction straight linear segment and/or the negative-direction straight linear segment create a target object having a preset height, a preset width and a preset shape, determining the positive-direction straight linear segment and/or the negative-direction straight linear segment to be peripheral boundaries of the object to be identified; and

if no, by executing the following modules, determining peripheral boundaries of the object to be identified (104):

a first-boundary determining module (305) configured for selecting, from the straight linear segments, a straight linear segment that is most close to the preset height and a preset angle, and determining the straight linear segment to be a first boundary, wherein the first boundary is a contacting line of light rays and the object to be identified (105);

a second-boundary determining module (306) configured for selecting, from the straight linear segments, a straight linear segment that has a height, a position and an angular symmetry same as a height, a position and an angular symmetry of the first boundary and has a distance from the first boundary less than a width of the object to be identified, and determining the straight linear segment to be a second boundary, wherein the second boundary is a contacting line of light rays and a shadow on the object to be identified in the image data (106); and

a peripheral-boundary drawing module (307) configured for, by using positions of the first boundary and the second boundary, drawing a peripheral boundary of the object to be identified, wherein the peripheral boundary is a contacting line of the shadow and a background on the object to be identified in the image data (107).

8. The device according to claim 7, wherein the peripheral-boundary drawing module (307) comprises:

an extended-line-intersection-point acquiring submodule (3071) configured for acquiring an intersection point of extended lines of the first boundary and the second boundary (207);

a first-angle acquiring submodule (3072) configured for acquiring a first angle between the first boundary and a horizontal line (208);

a third-angle acquiring submodule (3073) configured for, by using a difference between a straight angle and the first angle, obtaining a third angle (209); and

a peripheral-boundary determining submodule (3074) configured for, according to the intersection point and the third angle, determining the peripheral boundary of the object to be identified (210).

9. The device according to claim 8, wherein the peripheral-boundary determining submodule (307) comprises:

a line-segment drawing unit configured for drawing a line segment that passes through the intersection point of the extended lines of the first boundary and the second boundary, and causing an included angle between the line segment and a horizontal line to be the third angle; and

a peripheral-boundary determining unit configured for determining the line segment to be the peripheral boundary of the object to be identified.

10. The device according to claim 8, wherein the peripheral-boundary determining submodule (307) comprises:

a first-distance determining unit configured for determining a first height value of the first boundary and a first distance between the first boundary and a predetermined central line;

a line-segment-included-angle determining unit configured for drawing a line segment that passes through the intersection point of the extended lines of the first boundary and the second boundary, and causing an included angle between the line segment and a horizontal line to be the third angle;

a line-segment translating unit configured for moving the line segment in parallel, to cause a distance between the line segment and the predetermined central line to be equal to the first distance, and a height of the line segment to be equal to the first height value; and

a peripheral-boundary drawing module configured for determining the line segment that has been moved in parallel to be the peripheral boundary of the object to be identified.

11. The device according to claim 9 or 10, wherein the device further comprises:

a judging unit configured for judging whether a texture difference between a shadow area on the object to be identified and a natural-background area on the object to be identified that are separated by the line segment that has been moved in parallel exceeds a preset threshold; and

a determining unit configured for, if the texture difference exceeds the preset threshold, executing the peripheral-boundary determining unit, and if no, re-executing the peripheral-boundary drawing module.

**12.** The device according to claim 9 or 10, wherein the device further comprises:

a texture-difference-maximum-value determining unit configured for, by moving in parallel the line segment that has been moved in parallel, judging a maximum value of a texture difference between a shadow area on the object to be identified and a natural-background area on the object to be identified that are separated by the line segment that has been moved in parallel; and
an executing unit configured for, if the maximum value of the texture difference is greater than a preset threshold, executing the line-segment translating unit, and if no, re-executing the peripheral-boundary drawing module.

**13.** A vehicle, wherein the vehicle comprises the method and device for edge identification of a self-shadowing object based on a visual camera according to any one of claims 1-12.

**14.** A computer program, wherein the computer program comprises a computer-readable code (1031), and when the computer-readable code (1031) is executed on a calculating and processing device, the computer-readable code (1031) causes the calculating and processing device to implement the method for edge identification of a self-shadowing object based on a visual camera according to any one of claims 1-6.

**15.** A computer-readable medium, wherein the computer-readable medium stores the computer program according to claim 14.

**Patentansprüche**

**1.** Verfahren zur Kantenidentifikation eines selbstbeschattenden Objekts auf der Basis einer visuellen Kamera, **dadurch gekennzeichnet, dass** das Verfahren umfasst:

in einem Vorgang eines Fahrens eines Fahrzeugs Sammeln von Bilddaten eines zu identifizierenden Objekts (101), wobei das zu identifizierende Objekt ein Leitkegel ist;
Durchführen einer Differenzierungsverarbeitung an den Bilddaten, um ein Bild zu beziehen, das differenzierungsverarbeitet wurde, wobei die Differenzierungsverarbeitung an den Bilddaten unter Verwendung eines Sobel-Operators durchgeführt wird, und gemäß einem voreingestellten Schwellenwert Durchführen einer Drei-Werte-Verarbeitung an dem Bild, das differenzierungsverarbeitet wurde, um ein Drei-Werte-Bild zu beziehen, das Grenzpixel in der positiven Richtung und Grenzpixel in der negativen Richtung umfasst (102), wobei durch die Drei-Werte-Verarbeitung Werte jedes von Pixelpunkten des bezogenen Drei-Werte-Bildes aus einem Satz [-1, 0, 1] ausgewählt werden, und wobei die Grenzpixel in der positiven Richtung sich auf Pixelpunkte in dem Bild, das differenzierungsverarbeitet wurde, beziehen, die größer als der voreingestellte Schwellenwert sind und die als 1 zugeordnet sind, und die Grenzpixel in der negativen Richtung sich auf Pixelpunkte in dem Bild, das differenzierungsverarbeitet wurde, beziehen, die kleiner als der voreingestellte Schwellenwert sind und die als -1 zugeordnet sind;
gemäß den Grenzpixeln in der positiven Richtung und den Grenzpixeln in der negativen Richtung Beziehen eines geraden linearen Segments in der positiven Richtung und eines geraden linearen Segments in der negativen Richtung, die Grenztrends des zu identifizierenden Objekts darstellen (103), wobei der Schritt des Beziehens des geraden linearen Segments in der positiven Richtung und des geraden linearen Segments in der negativen Richtung, die die Grenztrends des zu identifizierenden Objekts darstellen, gemäß den Grenzpixeln in der positiven Richtung und den Grenzpixeln in der negativen Richtung (103) ein individuelles Gruppieren der Grenzpixel in der positiven Richtung und der Grenzpixel in der negativen Richtung umfasst, um jeweils eine Gruppe von Grenzpixeln in der positiven Richtung und eine Gruppe von Grenzpixeln in der negativen Richtung zu beziehen, wobei jedes von den Grenzpixeln in der positiven Richtung oder den Grenzpixeln in der negativen Richtung mit den anderen Grenzpixeln in seiner Gruppe in acht Richtungen verbunden ist; Durchführen einer Grenzpixelverschmälerung in einer horizontalen Richtung zu der Gruppe von Grenzpixeln in der positiven Richtung und der Gruppe von Grenzpixeln in der negativen Richtung, um jeweils eine Gruppe von verschmälerten Grenzpixeln in der positiven Richtung und eine Gruppe von verschmälerten Grenzpixeln in der negativen Richtung zu beziehen, wobei eine Gesamtmenge der Grenzpixel in der horizontalen Richtung innerhalb jeder von der Gruppe von verschmälerten Grenzpixeln in der positiven Richtung und der Gruppe von verschmälerten Grenzpixeln in der negativen Richtung einen voreingestellten Schwellenwert nicht übersteigt; und Durchführen einer Hough-Transformation an der Gruppe von verschmälerten Grenzpixeln in der positiven Richtung und der Gruppe von verschmälerten Grenzpixeln in der negativen Richtung, um jeweils das gerade lineare Segment in der positiven Richtung und das gerade lineare Segment in der negativen Richtung zu beziehen;

wenn das gerade lineare Segment in der positiven Richtung und/oder das gerade lineare Segment in der negativen Richtung ein Zielobjekt mit einer voreingestellten Höhe, einer voreingestellten Breite und einer voreingestellten Form erzeugen, Bestimmen des geraden linearen Segments in der positiven Richtung und/oder des geraden linearen Segments in der negativen Richtung als periphere Grenzen des zu identifizierenden Objekts und falls dies nicht der Fall ist, Durchführen der folgenden Schritte, um periphere Grenzen des zu identifizierenden Objekts zu bestimmen (104):

Auswählen eines geraden linearen Segments, das der voreingestellten Höhe und einem voreingestellten Winkel am nächsten ist, aus den geraden linearen Segmenten und Bestimmen des geraden linearen Segments als eine erste Grenze konfiguriert ist, wobei die erste Grenze eine Berührungslinie von Lichtstrahlen und dem zu identifizierenden Objekt ist (105);

Auswählen eines geraden linearen Segments, das eine Höhe, eine Position und eine Winkelsymmetrie aufweist, die identisch mit einer Höhe, einer Position und einer Winkelsymmetrie der ersten Grenze sind, und einen Abstand von der ersten Grenze aufweist, der kleiner als eine Breite des zu identifizierenden Objekts ist, aus den geraden linearen Segmenten und Bestimmen des geraden linearen Segments als eine zweite Grenze, wobei die zweite Grenze eine Berührungslinie von Lichtstrahlen und einem Schatten auf dem zu identifizierenden Objekt in den Bilddaten ist (106); und

durch Verwenden von Positionen der ersten Grenze und der zweiten Grenze Zeichnen einer peripheren Grenze des zu identifizierenden Objekts, wobei die periphere Grenze eine Berührungslinie des Schattens und eines Hintergrunds auf dem zu identifizierenden Objekt in den Bilddaten ist (107).

2. Verfahren nach Anspruch 1, wobei der Schritt des Zeichnens der peripheren Grenze des zu identifizierenden Objekts durch Verwenden der Positionen der ersten Grenze und der zweiten Grenze umfasst:

Beziehen eines Schnittpunkts von erweiterten Linien der ersten Grenze und der zweiten Grenze (207);

Beziehen eines ersten Winkels zwischen der ersten Grenze und einer horizontalen Linie (208); durch Verwenden einer Differenz zwischen einem gestreckten Winkel und dem ersten Winkel Erhalten eines dritten Winkels (209) und

gemäß dem Schnittpunkt und dem dritten Winkel Bestimmen der peripheren Grenze des zu identifizierenden Objekts (210).

3. Verfahren nach Anspruch 2, wobei der Schritt des Bestimmens der peripheren Grenze des zu identifizierenden Objekts gemäß dem Schnittpunkt und dem dritten Winkel (210) umfasst:

Zeichnen eines Liniensegments, das durch den Schnittpunkt der erweiterten Linien der ersten Grenze und der zweiten Grenze verläuft, und Bewirken, dass ein eingeschlossener Winkel zwischen dem Liniensegment und einer horizontalen Linie der dritte Winkel ist;

und Bestimmen des Liniensegments als die periphere Grenze des zu identifizierenden Objekts.

4. Verfahren nach Anspruch 2, wobei der Schritt des Bestimmens der peripheren Grenze des zu identifizierenden Objekts gemäß dem Schnittpunkt und dem dritten Winkel (210) umfasst:

Bestimmen eines ersten Höhenwerts der ersten Grenze und eines ersten Abstands zwischen der ersten Grenze und einer vorbestimmten zentralen Linie;

Zeichnen eines Liniensegments, das durch den Schnittpunkt der erweiterten Linien der ersten Grenze und der zweiten Grenze verläuft, und Bewirken, dass ein eingeschlossener Winkel zwischen dem Liniensegment und einer horizontalen Linie der dritte Winkel ist;

paralleles Bewegen des Liniensegments, um zu bewirken, dass ein Abstand zwischen dem Liniensegment und der vorbestimmten zentralen Linie gleich dem ersten Abstand ist und eine Höhe des Liniensegments gleich dem ersten Höhenwert ist; und

Bestimmen des Liniensegments, das parallel bewegt wurde, als die periphere Grenze des zu identifizierenden Objekts.

5. Verfahren nach Anspruch 3 oder 4, wobei das Verfahren vor dem Schritt des Bestimmens des Liniensegments, das parallel bewegt wurde, als die periphere Grenze des zu identifizierenden Objekts weiterhin umfasst:

Beurteilen, ob eine Texturdifferenz zwischen einem Schattenbereich auf dem zu identifizierenden Objekt und einem natürlichen Hintergrundbereich auf dem zu identifizierenden Objekt, die durch das Liniensegment, das parallel bewegt wurde, getrennt sind, einen voreingestellten Schwellenwert übersteigt; und
wenn die Texturdifferenz den voreingestellten Schwellenwert übersteigt, Aufnehmen des Schritts des Bestimmens des Liniensegments, das parallel bewegt wurde, als die periphere Grenze des zu identifizierenden Objekts, und falls dies nicht der Fall ist, erneutes Aufnehmen des Schritts des Bestimmens der peripheren Grenze des zu identifizierenden Objekts.

6. Verfahren nach Anspruch 3 oder 4, wobei das Verfahren vor dem Schritt des Bestimmens des Liniensegments, das parallel bewegt wurde, als die periphere Grenze des zu identifizierenden Objekts weiterhin umfasst:
durch paralleles Bewegen des Liniensegments, das parallel bewegt wurde, Beurteilen eines Höchstwerts einer Texturdifferenz zwischen einem Schattenbereich auf dem zu identifizierenden Objekt und einem natürlichen Hintergrundbereich auf dem zu identifizierenden Objekt, die durch das Liniensegment, das parallel bewegt wurde, getrennt sind; und wenn der Höchstwert der Texturdifferenz größer als ein voreingestellter Schwellenwert ist, Aufnehmen des Schritts des Bestimmens des Liniensegments, das parallel bewegt wurde, als die periphere Grenze des zu identifizierenden Objekts, und falls dies nicht der Fall ist, erneutes Aufnehmen des Schritts des Bestimmens der peripheren Grenze des zu identifizierenden Objekts.

7. Vorrichtung zur Kantenidentifikation eines selbstbeschattenden Objekts auf der Basis einer visuellen Kamera, **dadurch gekennzeichnet, dass** die Vorrichtung umfasst:

ein Bildsammelmodul (301), das in einem Vorgang eines Fahrens eines Fahrzeugs zum Sammeln von Bilddaten eines zu identifizierenden Objekts (101) konfiguriert ist, wobei das zu identifizierende Objekt ein Leitkegel ist;
ein Drei-Werte-Modul (302), das zum Durchführen einer Differenzierungsverarbeitung an den Bilddaten, um ein Bild zu beziehen, das differenzierungsverarbeitet wurde, wobei die Differenzierungsverarbeitung an den Bilddaten unter Verwendung eines Sobel-Operators durchgeführt wird, und gemäß einem voreingestellten Schwellenwert Durchführen einer Drei-Werte-Verarbeitung an dem Bild, das differenzierungsverarbeitet wurde, um ein Drei-Werte-Bild zu beziehen, das Grenzpixel in der positiven Richtung und Grenzpixel in der negativen Richtung umfasst (102), konfiguriert ist, wobei durch die Drei-Werte-Verarbeitung Werte jedes von Pixelpunkten des bezogenen Drei-Werte-Bildes aus einem Satz [-1, 0, 1] ausgewählt werden, und wobei die Grenzpixel in der positiven Richtung sich auf Pixelpunkte in dem Bild, das differenzierungsverarbeitet wurde, beziehen, die größer als der voreingestellte Schwellenwert sind und die als 1 zugeordnet sind, und die Grenzpixel in der negativen Richtung sich auf Pixelpunkte in dem Bild, das differenzierungsverarbeitet wurde, beziehen, die kleiner als der voreingestellte Schwellenwert sind und die als -1 zugeordnet sind; ein Modul (303) zum Beziehen von geraden linearen Segmenten, das zum Beziehen eines geraden linearen Segments in der positiven Richtung und eines geraden linearen Segments in der negativen Richtung, die Grenztrends des zu identifizierenden Objekts darstellen (103), gemäß den Grenzpixeln in der positiven Richtung und den Grenzpixeln in der negativen Richtung, wobei die Operation des Beziehens des geraden linearen Segments in der positiven Richtung und des geraden linearen Segments in der negativen Richtung, die die Grenztrends des zu identifizierenden Objekts darstellen, gemäß den Grenzpixeln in der positiven Richtung und den Grenzpixeln in der negativen Richtung (103) ein individuelles Gruppieren der Grenzpixel in der positiven Richtung und der Grenzpixel in der negativen Richtung umfasst, um jeweils eine Gruppe von Grenzpixeln in der positiven Richtung und eine Gruppe von Grenzpixeln in der negativen Richtung zu beziehen, wobei jedes von den Grenzpixeln in der positiven Richtung oder den Grenzpixeln in der negativen Richtung mit den anderen Grenzpixeln in seiner Gruppe in acht Richtungen verbunden ist;
Durchführen einer Grenzpixelverschmälerung in einer horizontalen Richtung zu der Gruppe von Grenzpixeln in der positiven Richtung und der Gruppe von Grenzpixeln in der negativen Richtung, um jeweils eine Gruppe von verschmälerten Grenzpixeln in der positiven Richtung und eine Gruppe von verschmälerten Grenzpixeln in der negativen Richtung zu beziehen, wobei eine Gesamtmenge der Grenzpixel in der horizontalen Richtung innerhalb jeder von der Gruppe von verschmälerten Grenzpixeln in der positiven Richtung und der Gruppe von verschmälerten Grenzpixeln in der negativen Richtung einen voreingestellten Schwellenwert nicht übersteigt; und Durchführen einer Hough-Transformation an der Gruppe von verschmälerten Grenzpixeln in der positiven Richtung und der Gruppe von verschmälerten Grenzpixeln in der negativen Richtung, um jeweils das gerade lineare Segment in der positiven Richtung und das gerade lineare Segment in der negativen Richtung zu beziehen, konfiguriert ist;
ein Modul (304) zum Bestimmen von peripheren Grenzen, das, wenn das gerade lineare Segment in der positiven Richtung und/oder das gerade lineare Segment in der negativen Richtung ein Zielobjekt mit einer voreingestellten Höhe, einer voreingestellten Breite und einer voreingestellten Form erzeugen, zum Bestimmen des geraden linearen Segments in der positiven Richtung und/oder des geraden linearen Segments in der negativen Richtung als periphere Grenzen des zu identifizierenden Objekts konfiguriert ist; und

falls dies nicht der Fall ist, durch Ausführen der folgenden Module Bestimmen von peripheren Grenzen des zu identifizierenden Objekts (104):

ein Modul (305) zum Bestimmen einer ersten Grenze, das zum Auswählen eines geraden linearen Segments, das der voreingestellten Höhe und einem voreingestellten Winkel am nächsten ist, aus den geraden linearen Segmenten und Bestimmen des geraden linearen Segments als eine erste Grenze konfiguriert ist, wobei die erste Grenze eine Berührungslinie von Lichtstrahlen und dem zu identifizierenden Objekt ist (105);
ein Modul (306) zum Bestimmen einer zweiten Grenze, das zum Auswählen eines geraden linearen Segments, das eine Höhe, eine Position und eine Winkelsymmetrie aufweist, die identisch mit einer Höhe, einer Position und einer Winkelsymmetrie der ersten Grenze sind, und einen Abstand von der ersten Grenze aufweist, der kleiner als eine Breite des zu identifizierenden Objekts ist, aus den geraden linearen Segmenten und Bestimmen des geraden linearen Segments als eine zweite Grenze konfiguriert ist, wobei die zweite Grenze eine Berührungslinie von Lichtstrahlen und einem Schatten auf dem zu identifizierenden Objekt in den Bilddaten ist (106); und
ein Modul (307) zum Zeichnen einer peripheren Grenze, die durch Verwenden von Positionen der ersten Grenze und der zweiten Grenze zum Zeichnen einer peripheren Grenze des zu identifizierenden Objekts konfiguriert ist, wobei die periphere Grenze eine Berührungslinie des Schattens und eines Hintergrunds auf dem zu identifizierenden Objekt in den Bilddaten ist (107).

8. Vorrichtung nach Anspruch 7, wobei das Modul (307) zum Zeichnen der peripheren Grenze umfasst:

ein Untermodul (3071) zum Beziehen eines Schnittpunkts von erweiterten Linien, das zum Beziehen eines Schnittpunkts von erweiterten Linien der ersten Grenze und der zweiten Grenze konfiguriert ist (207);
ein Untermodul (3072) zum Beziehen eines ersten Winkels, das zum Beziehen eines ersten Winkels zwischen der ersten Grenze und einer horizontalen Linie konfiguriert ist (208);
ein Untermodul (3073) zum Beziehen eines dritten Winkels, das durch Verwenden einer Differenz zwischen einem gestreckten Winkel und dem ersten Winkel zum Erhalten eines dritten Winkels konfiguriert ist (209); und
ein Untermodul (3074) zum Bestimmen einer peripheren Grenze, das gemäß dem Schnittpunkt und dem dritten Winkel zum Bestimmen der peripheren Grenze des zu identifizierenden Objekts konfiguriert ist (210).

9. Vorrichtung nach Anspruch 8, wobei das Untermodul (307) zum Bestimmen der peripheren Grenze umfasst:

eine Einheit zum Zeichnen eines Liniensegments, die zum Zeichnen eines Liniensegments, das durch den Schnittpunkt der erweiterten Linien der ersten Grenze und der zweiten Grenze verläuft, und Bewirken, dass ein eingeschlossener Winkel zwischen dem Liniensegment und einer horizontalen Linie der dritte Winkel ist, konfiguriert ist; und eine Einheit zum Bestimmen einer peripheren Grenze, die zum Bestimmen des Liniensegments als die periphere Grenze des zu identifizierenden Objekts konfiguriert ist.

10. Vorrichtung nach Anspruch 8, wobei das Untermodul (307) zum Bestimmen der peripheren Grenze umfasst:

eine Einheit zum Bestimmen eines ersten Abstands, die zum Bestimmen eines ersten Höhenwerts der ersten Grenze und eines ersten Abstands zwischen der ersten Grenze und einer vorbestimmten zentralen Linie konfiguriert ist;
eine Einheit zum Zeichnen eines eingeschlossenen Winkels eines Liniensegments, die zum Zeichnen eines Liniensegments, das durch den Schnittpunkt der erweiterten Linien der ersten Grenze und der zweiten Grenze verläuft, und Bewirken, dass ein eingeschlossener Winkel zwischen dem Liniensegment und einer horizontalen Linie der dritte Winkel ist, konfiguriert ist;
eine Einheit zum Verschieben eines Liniensegments, die zum parallelen Bewegen des Liniensegments, um zu bewirken, dass ein Abstand zwischen dem Liniensegment und der vorbestimmten zentralen Linie gleich dem ersten Abstand ist und eine Höhe des Liniensegments gleich dem ersten Höhenwert ist, konfiguriert ist; und
ein Modul zum Zeichnen einer peripheren Grenze, das zum Bestimmen des Liniensegments, das parallel bewegt wurde, als die periphere Grenze des zu identifizierenden Objekts konfiguriert ist.

11. Vorrichtung nach Anspruch 9 oder 10, wobei die Vorrichtung weiterhin umfasst:

eine Beurteilungseinheit, die zum Beurteilen, ob eine Texturdifferenz zwischen einem Schattenbereich auf dem zu identifizierenden Objekt und einem natürlichen Hintergrundbereich auf dem zu identifizierenden Objekt, die durch das Liniensegment, das parallel bewegt wurde, getrennt sind, einen voreingestellten Schwellenwert übersteigt, konfiguriert ist; und

eine Bestimmungseinheit, die, wenn die Texturdifferenz den voreingestellten Schwellenwert übersteigt, zum Ausführen der Einheit zum Bestimmen der peripheren Grenze, und falls dies nicht der Fall ist, zum erneuten Ausführen des Moduls zum Zeichnen der peripheren Grenze konfiguriert ist.

**12.** Vorrichtung nach Anspruch 9 oder 10, wobei die Vorrichtung weiterhin umfasst:

eine Einheit zum Bestimmen eines Höchstwerts einer Texturdifferenz, die durch paralleles Bewegen des Liniensegments, das parallel bewegt wurde, zum Beurteilen eines Höchstwerts einer Texturdifferenz zwischen einem Schattenbereich auf dem zu identifizierenden Objekt und einem natürlichen Hintergrundbereich auf dem zu identifizierenden Objekt, die durch das Liniensegment, das parallel bewegt wurde, getrennt sind, konfiguriert ist; und

eine Ausführungseinheit, die, wenn der Höchstwert der Texturdifferenz größer als ein voreingestellter Schwellenwert ist, zum Ausführen der Einheit zum Verschieben eines Liniensegments, und falls dies nicht der Fall ist, zum erneuten Ausführen des Moduls zum Zeichnen der peripheren Grenze konfiguriert ist.

**13.** Fahrzeug, **dadurch gekennzeichnet, dass** das Fahrzeug des Verfahren und die Vorrichtung zur Kantenidentifikation eines selbstbeschattenden Objekts auf der Basis einer visuellen Kamera nach einem der Ansprüche 1-12 umfasst.

**14.** Computerprogramm, **dadurch gekennzeichnet, dass** das Computerprogramm einen computerlesbaren Code (1031) umfasst, und wenn der computerlesbare Code (1031) auf einer Berechnungs- und Verarbeitungsvorrichtung ausgeführt wird, der computerlesbare Code (1031) bewirkt, dass die Berechnungs- und Verarbeitungsvorrichtung das Verfahren zur Kantenidentifikation eines selbstbeschattenden Objekts auf der Basis einer visuellen Kamera nach einem der Ansprüche 1-6 implementiert.

**15.** Computerlesbares Medium, **dadurch gekennzeichnet, dass** das computerlesbare Medium das Computerprogramm nach Anspruch 14 speichert.

## Revendications

**1.** Un procédé d'identification de bord d'un objet auto-ombragé basé sur une caméra visuelle, **caractérisé en ce que** le procédé comprend :

un processus de déplacement d'un véhicule, collectant des données d'image d'un objet à identifier (101), l'objet à identifier étant un cône de signalisation ;

effectuer un traitement de différenciation sur les données d'image, pour acquérir une image qui a été traitée par différenciation, le traitement par différenciation sur les données d'image étant effectué à l'aide d'un filtre Sobel, et selon un seuil prédéfini, effectuer un traitement à trois valeurs de l'image qui a été traitée par un traitement par différenciation, pour acquérir une image à trois valeurs comprenant des pixels de limite de direction positive et des pixels de limite de direction négative (102), dans lequel, par le traitement à trois valeurs, les valeurs de chacun des points de pixel de l'image acquise à trois valeurs sont sélectionnées dans un ensemble [-**1,0,1**], et dans lequel les pixels de limite de direction positive font référence à des points de pixel dans l'image qui a été traitée par différenciation et qui sont supérieurs à un seuil prédéfini et sont affectés pour être 1, et les pixels de limite de direction négative font référence à des points de pixel dans l'image qui a été traitée par différenciation et qui sont inférieurs au seuil prédéfini et qui sont affectés pour être - **1;**
selon les pixels de limite de direction positive et les pixels de limite de direction négative, acquérir un segment linéaire droit de direction positive et un segment linéaire droit de direction négative qui représentent les tendances de limite de l'objet à identifier (103), l'étape consistant, en fonction des pixels de limite de direction positive et des pixels de limite de direction négative, à acquérir le segment linéaire droit de direction positive et le segment linéaire droit de direction négative qui représentent les tendances de limite de l'objet à identifier (103) comprenant le regroupement individuel des pixels de limite de direction positive et les pixels de limite de direction négative, afin d'acquérir respectivement un groupe de pixels de limite de direction positive et un groupe de pixels de limite de direction négative, chacun des pixels de limite de direction positive ou des pixels de limite de direction négative étant connecté aux autres pixels de limite de son groupe dans huit directions ; effectuant ainsi un rétrécissement du pixel de limite dans une direction horizontale jusqu'au groupe de pixels de limite de direction positive et le groupe de pixels de limite de direction négative, pour acquérir respectivement un groupe de pixels de limite rétrécie de direction positive et un groupe de pixels de limite rétrécie de direction négative, dans lesquels une quantité totale m de pixels de limite de direction horizontale au sein de chacun du groupe de pixels à limite rétrécie de direction positive et du groupe de pixels à limite rétrécie dans la direction négative ne dépasse pas un seuil prédéfini ; et effectuer une transformation de Hough sur le groupe de pixels de limite rétrécie de direction positive et sur le groupe de pixels de limite rétrécie de direction négative, pour acquérir respectivement le segment linéaire droit de direction positive et le segment linéaire droit de direction négative ;
si le segment linéaire droit de direction positive et/ou le segment linéaire droit de direction négative crée un objet cible ayant une hauteur prédéfinie, une largeur prédéfinie et une forme prédéfinie, déterminant le segment linéaire droit de direction positive et/ou le segment linéaire droit de direction négative comme étant des limites périphériques de l'objet à identifier ; et

si non, effectuer les étapes suivantes pour déterminer les limites périphériques de l'objet à identifier (104) :
sélectionner, parmi les segments linéaires droits, un segment linéaire droit qui est le plus proche de la hauteur prédéfinie et d'un angle prédéfini, et déterminer le segment linéaire droit comme étant une première limite, la première limite étant une ligne de contact de rayons lumineux et l'objet à identifier (105);

sélectionner, parmi les segments linéaires droits, un segment linéaire droit qui a une hauteur, une position et une symétrie angulaire identiques à une hauteur, une position et une symétrie angulaire de la première limite et ayant une distance par rapport à la première limite inférieure à une largeur de l'objet à identifier, et déterminer le segment linéaire droit comme étant une seconde limite, dans lequel la seconde limite est une ligne de contact de rayons lumineux et une ombre sur l'objet à identifier dans les données d'image (106) ; et
en utilisant les positions de la première limite et de la seconde limite, dessiner une limite périphérique de l'objet à identifier, la limite périphérique étant une ligne de contact de l'ombre et un arrière-plan sur l'objet à identifier dans les données d'image (107).

**2.** Le procédé selon la revendication 1, dans lequel l'étape consistant à utiliser les positions de la première limite et de la seconde limite, à dessiner la limite périphérique de l'objet à être identifié comprend :

acquérir un point d'intersection de lignes étendues de la première limite et de la seconde limite (207) ;

acquérir un premier angle entre la première limite et une ligne horizontale (208) ;
en utilisant une différence entre un angle droit et le premier angle, on obtient un troisième angle (209); et

en fonction du point d'intersection et du troisième angle, déterminer la limite périphérique de l'objet à identifier (210).

**3.** Le procédé selon la revendication 2, dans lequel l'étape consistant selon le point d'intersection et du troisième angle, à déterminer la limite périphérique de l'objet à identifier (210), comprend :

dessiner un segment de ligne qui passe par le point d'intersection des lignes étendues de la première limite et de la seconde limite, et faire en sorte qu'un angle inclus entre le segment de ligne et une ligne horizontale soit le troisième angle ; et
déterminer le segment de ligne comme étant la limite périphérique de l'objet à identifier.

**4.** Le procédé selon la revendication 2, dans lequel l'étape consistant en fonction du point d'intersection et du troisième angle, à déterminer la limite périphérique de l'objet à identifier (210), comprend :

déterminer une première valeur de hauteur de la première limite et une première distance entre la première limite et une ligne centrale prédéterminée ;
dessiner un segment de ligne qui passe par le point d'intersection des lignes étendues de la première limite et de la seconde limite, et faire en sorte qu'un angle inclus entre le segment de ligne et une ligne horizontale soit le troisième angle ;

déplacer le segment de ligne en parallèle, pour qu'une distance entre le segment de ligne et la ligne centrale prédéterminée soit égale à la première distance, et une hauteur du segment de ligne pour être égale à la première valeur de hauteur ; et

déterminer le segment de ligne qui a été déplacé m parallèlement pour être la limite périphérique de l'objet à identifier.

5. Un procédé selon la revendication 3 ou 4, dans lequel avant l'étape de détermination du segment de ligne qui a été déplacé parallèlement comme étant la limite périphérique de l'objet à être identifié, le procédé comprend en outre :

évaluer si une différence de texture entre une zone d'ombre sur l'objet à identifier et une zone d'arrière-plan naturel sur l'objet à identifier qui sont séparées par le segment de ligne qui a été déplacé en parallèle dépasse un seuil prédéfini ; et

si la différence de texture dépasse le seuil prédéfini, passer à l'étape de détermination du segment de ligne qui a été déplacé en parallèle pour constituer la limite périphérique de l'objet à identifier, et si ce n'est pas le cas, reprendre l'étape de détermination de la limite périphérique de l'objet à identifier.

6. Un procédé selon la revendication 3 ou 4, dans lequel avant l'étape de détermination du segment de ligne qui a été déplacé parallèlement comme étant la limite périphérique de l'objet à être identifié, le procédé comprend en outre :
par déplacement parallèle du segment de ligne qui a été déplacé en parallèle, évaluer une valeur maximale d'une différence de texture entre une zone d'ombre sur l'objet à identifier et une zone d'arrière-plan naturel sur l'objet à identifier qui sont séparées par le segment de ligne qui a été déplacé en parallèle ; et

si la valeur maximale de la différence de texture est supérieure à un seuil prédéfini, entrer l'étape consistant à déterminer le segment de ligne qui a été déplacé en parallèle comme étant la limite périphérique de l'objet à identifier, et si tel n'est pas le cas, à reprendre l'étape de détermination de la limite périphérique de l'objet à identifier.

7. Un dispositif d'identification des bords d'un objet auto-ombragé basé sur une caméra visuelle, **caractérisé en ce que** le dispositif comprend :

un module de collecte d'images (301) configuré pour, lors d'un processus de déplacement d'un véhicule, collecter des données d'image d'un objet à identifier (101), l'objet à identifier étant un cône de signalisation ;
un module à trois valeurs (302) configuré pour effectuer un traitement par différenciation des données de l'image, pour acquérir une image qui a été traitée par différenciation, le traitement par différenciation sur les données de l'image étant effectué à l'aide d'un filtre Sobel, et selon un seuil prédéfini, en effectuant un traitement à trois valeurs sur l'image qui a été traitée par différenciation, pour acquérir une image à trois valeurs comprenant des pixels de limite de direction positive et des pixels de limite de direction négative (102), dans lequel, en fonction du traitement à trois valeurs,
les valeurs de chacun des points de pixel de l'image à trois valeurs acquise sont sélectionnées à partir d'un ensemble **[-1,0,1],** et dans lequel les pixels de limite de direction positive font référence à des points de pixels dans l'image qui a été traitée par différenciation qui sont supérieurs à un seuil prédéfini et sont affectés pour être 1, et les pixels de limite de direction négative font référence à des points de pixels dans l'image qui a été traitée par différenciation et qui sont inférieurs au seuil prédéfini et qui sont affectés pour être **-1;**
un module d'acquisition de segment linéaire droit (303) configuré pour, en fonction des pixels de limite de direction positive et des pixels de limite de direction négative, acquérir un segment linéaire droit de direction positive et un segment linéaire droit de direction négative qui représentent des tendances de limite de l'objet à identifier (103), dans lequel le fonctionnement de, en fonction des pixels de limite de direction positive et des pixels de limite de direction négative, l'acquisition du segment linéaire droit de direction positive et du segment linéaire droit de direction négative qui représentent les tendances limites de l'objet à identifier (103) comprend le regroupement individuel des pixels de limite de direction positive et des pixels de limite de direction négative, les pixels de limite de direction positive et les pixels de limite de direction négative, pour acquérir respectivement un groupe de pixels de limite de direction positive et un groupe de pixels de limite de direction négative, chacun des pixels de limite de direction positive ou des pixels de limite de direction négative étant connecté aux autres pixels de limite de son groupe dans huit directions ; effectuer un rétrécissement des pixels limites dans une direction horizontale vers le groupe de pixels limites de direction positive et le groupe de pixels limites de direction négative, pour acquérir respectivement un groupe de pixels à limite rétrécie dans la direction positive et un groupe de pixels à limite rétrécie dans la direction négative, dans lequel une quantité totale de pixels de limite dans la direction horizontale à l'intérieur de chacun du groupe de pixels de limite rétrécie dans la direction positive et du groupe de pixels de limite rétrécie dans la direction négative ne dépassent pas un seuil prédéfini ; et effectuer une transformation de Hough sur le groupe de pixels de limite rétrécie de direction positive et du groupe de pixels de limite rétrécie de direction négative, pour acquérir respectivement le segment linéaire droit de direction positive et le segment linéaire droit de direction négative ;

un module de détermination de limite périphérique (304) configuré pour, si le segment linéaire droit de direction positive et/ou le segment linéaire droit de direction négative créent une cible d'objet ayant une hauteur prédéfinie, une largeur prédéfinie et une forme prédéfinie, déterminer le segment linéaire droit de direction positive et/ou le segment linéaire droit de direction négative comme étant des limites périphériques de l'objet à identifier ; et
si non, en exécutant les modules suivants, déterminer des limites périphériques de l'objet à identifier (104) :

un module de détermination de première limite (305) configuré pour sélectionner, parmi les segments linéaires droits, un segment linéaire droit qui est le plus proche de la hauteur prédéfinie et d'un angle prédéfini, et déterminer le segment linéaire droit comme étant une première limite, dans lequel la première limite est une ligne de contact de rayons lumineux et l'objet à identifier (105) ;
un second module de détermination de limite (306) configuré pour sélectionner, à partir des segments linéaires droits, un segment linéaire droit qui a une hauteur, une position et une symétrie angulaire identiques à la hauteur, une position et une symétrie angulaire de la première limite et dont la distance par rapport à la première limite est inférieure à la largeur de l'objet à être identifié, et déterminer le segment linéaire droit comme étant une seconde limite, la seconde limite étant une ligne de contact de rayons lumineux et une ombre sur l'objet à identifier dans les données de l'image (106) ; et

un module de dessin de limite périphérique (307) configuré pour, en utilisant les positions de la première limite et de la seconde limite, dessiner une limite périphérique de l'objet à identifier, la limite périphérique étant une ligne de contact de l'ombre et un arrière-plan sur l'objet à identifier dans les données de l'image (107).

8. Le dispositif selon la revendication 7, dans lequel le module de dessin de limite périphérique (307), comprend :

un sous-module d'acquisition de point d'intersection de ligne étendue (3071) configuré pour acquérir un point d'intersection de lignes étendues de la première limite et de la seconde limite (207) ; un sous-module d'acquisition de premier angle (3072) configuré pour acquérir un premier angle entre la première limite et une ligne horizontale (208) ;
un sous-module d'acquisition de troisième angle (3073) configuré pour, en utilisant une différence entre un angle droit et le premier angle, obtenir un troisième angle (209) ; et
un sous-module de détermination de limite périphérique (3074) configuré pour, en fonction du point d'intersection et du troisième angle, déterminer la limite périphérique de l'objet à être identifié (210).

9. Le dispositif selon la revendication 8, dans lequel le sous-module de détermination de limite périphérique (307) comprend :

une unité de dessin de segment de ligne configurée pour dessiner un segment de ligne qui passe par le point d'intersection des lignes étendues de la première limite et de la seconde limite, et
faire en sorte qu'un angle inclus entre le segment de ligne et une ligne horizontale soit le troisième angle ; et
une unité de détermination de limite périphérique configurée pour déterminer que le segment de ligne est la limite périphérique de l'objet à identifier.

10. Le dispositif selon la revendication 8, dans lequel le sous-module (307) de détermination de limite périphérique comprend :

une unité de détermination de première distance configurée pour déterminer une première valeur de hauteur de la première limite et une première distance entre la première limite et une ligne centrale prédéterminée ;

une unité de détermination de l'angle inclus du segment de ligne configurée pour dessiner un segment de ligne qui passe par le point d'intersection des lignes prolongées de la première limite et une seconde limite, et faire en sorte qu'un angle inclus entre le segment de ligne et une ligne horizontale soit le troisième angle ;
une unité de translation de segment de ligne configurée pour déplacer le segment de ligne en parallèle, pour qu'une distance entre le segment de ligne et la ligne centrale prédéterminée soit égale à la première distance, et qu'une hauteur du segment de ligne soit égale à la première hauteur valeur ; et

un module de dessin de limite périphérique configuré pour déterminer le segment de ligne qui a été déplacé en parallèle pour être la limite périphérique de l'objet à identifier.

11. Le dispositif selon la revendication 9 ou 10, dans lequel le dispositif comprend en outre :

une unité d'évaluation configurée pour déterminer s'il existe une différence de texture entre une zone d'ombre sur l'objet à identifier et une zone d'arrière-plan naturel sur l'objet à identifier qui sont séparées par le segment de ligne qui a été déplacé en parallèle, dépasse un seuil prédéfini ; et
une unité de détermination configurée pour, si la différence de texture dépasse le seuil prédéfini, exécuter l'unité de détermination de limite périphérique, et si ce n'est pas le cas, réexécuter le module de dessin de limite périphérique.

12. Le dispositif selon la revendication 9 ou 10, dans lequel le dispositif comprend en outre :

une unité de détermination de valeur maximale de différence de texture configurée pour, en déplaçant en parallèle le segment de ligne qui a été déplacé en parallèle, déterminer une valeur maximale d'une différence de texture entre une zone d'ombre sur l'objet à identifier et un arrière-plan naturel zone de l'objet à identifier séparée par le segment de ligne qui a été déplacé en parallèle ; et
une unité d'exécution configurée pour, si la valeur maximale de la différence de texture est supérieure à un seuil prédéfini, exécuter l'unité de translation de segment de ligne, et si ce n'est pas le cas, réexécuter le module de dessin de limite périphérique.

13. Un véhicule, **caractérisé en ce que** le véhicule comprend le procédé et le dispositif d'identification d'un objet auto-ombragé sur la base d'une caméra visuelle selon l'une quelconque des revendications 1 à 12.

14. Un programme informatique, **caractérisé en ce que** le programme informatique comprend un code lisible par ordinateur (1031), et lorsque le code lisible par ordinateur (1031) est exécuté sur un dispositif de calcul et de traitement, le code lisible par ordinateur (1031) provoque le calcul et un dispositif de traitement pour mettre en oeuvre le procédé d'identification de bord d'un objet auto-ombragé sur la base d'une caméra visuelle selon l'une quelconque des revendications 1 à 6.

15. Un support lisible par ordinateur, **caractérisé en ce que** le support lisible par ordinateur stocke le programme informatique selon la revendication 14.

in a process of travelling of a vehicle , collecting image data of an object to be identified — 101

performing differentiation processing to the image data , to acquire an image that has been differentiation -processed, and according to a preset threshold , performing three - value processing to the image that has been differentiation -processed, to acquire a three - value image comprising positive -direction boundary pixels and negative -direction boundary pixels — 102

according to the positive -direction boundary pixels and the negative -direction boundary pixels, acquiring a positive -direction straight linear segment and a negative -direction straight linear segment that represent boundary trends of the object to be identified — 103

if the straight linear segments create a target object having a preset height , a preset width and a preset shape , determining the straight linear segments to be peripheral boundaries of the object to be identified ; if no, performing the following steps , to determine peripheral boundaries of the object to be identified — 104

selecting, from the straight linear segments , a straight linear segment that is most close to the preset height and a preset angle , and determining the straight linear segment to be a first boundary, wherein the first boundary is a contacting line of a light ray and the object to be identified — 105

selecting, from the straight linear segments , a straight linear segment that has a height , a position and an angular symmetries same as a height , a position and an angular symmetry of the first boundary and has a distance less than a width of the object to be identified , and determining the straight linear segment to be a second boundary , wherein the second boundary is a contacting line of a light ray and a shadow on the object to be identified in the image data — 106

by using positions of the first boundary and the second boundary , drawing a peripheral boundary of the object to be identified , wherein the peripheral boundary is a contacting line of the shadow and a background on the object to be identified in the image data — 107

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Line-detection-Hough:

Fig. 15

Fig. 16

Fig. 17

Fig. 18

| in a process of travelling of a vehicle, collecting image data of an object to be identified | 201 |

| performing differentiation processing to the image data, to acquire an image that has been differentiation-processed, and according to a preset threshold, performing three-value processing to the image that has been differentiation-processed, to acquire a three-value image comprising positive-direction boundary pixels and negative-direction boundary pixels | 202 |

| according to the positive-direction boundary pixels and the negative-direction boundary pixels, acquiring a positive-direction straight linear segment and a negative-direction straight linear segment that represent boundary trends of the object to be identified | 203 |

| if the straight linear segments create a target object having a preset height, a preset width and a preset shape, determining the straight linear segments to be peripheral boundaries of the object to be identified; if no, performing the following steps, to determine peripheral boundaries of the object to be identified | 204 |

| selecting, from the straight linear segments, a straight linear segment that is most close to the preset height and a preset angle, and determining the straight linear segment to be a first boundary, wherein the first boundary is a contacting line of a light ray and the object to be identified | 205 |

| selecting, from the straight linear segments, a straight linear segment that has a height, a position and an angular symmetries same as a height, a position and an angular symmetry of the first boundary and has a distance less than a width of the object to be identified, and determining the straight linear segment to be a second boundary, wherein the second boundary is a contacting line of a light ray and a shadow on the object to be identified in the image data | 206 |

| acquiring an intersection point of extended lines of the first boundary and the second boundary | 207 |

| acquiring a first angle between the first boundary and a horizontal line | 208 |

| by using a difference between a straight angle and the first angle, obtaining a third angle | 209 |

| according to the intersection point and the third angle, determining the peripheral boundary of the object to be identified | 210 |

Fig. 19

Fig. 20

Fig. 21

| image collecting module | 301 |

| three-value module | 302 |

| straight-linear-segment acquiring module | 303 |

| peripheral-boundary determining module | 304 |

| first-boundary determining module | 305 |

| second-boundary determining module | 306 |

| peripheral-boundary drawing module | 307 |

Fig. 22

image collecting module ~ 301

three-value module ~ 302

straight-linear-segment acquiring module ~ 303

peripheral-boundary determining module ~ 304

first-boundary determining module ~ 305

second-boundary determining module ~ 306

peripheral-boundary drawing module ~ 307

extended-line-intersection-point acquiring submodule ~ 3071

first-angle acquiring submodule ~ 3072

third-angle acquiring submodule ~ 3073

peripheral-boundary determining submodule ~ 3074

Fig. 23

processor 1010

memory 1020

space for the program code 1030

1031

program code for implementing the steps of the method according to the present disclosure

calculating and processing device

Fig. 24

storage unit for the program code

1031'

readable code for implementing the steps of the method according to the present disclosure

Fig. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810712073

**Non-patent literature cited in the description**

- **YONG HUANG et al.** Real-time traffic cone detection for autonomous vehicle. *2015 34TH CHINESE CONTROL CONFERENCE (CCC), TECHNICAL COMMITTEE ON CONTROL THEORY, CHINESE ASSOCIATION OF AUTOMATION,* 28 July 2015, 3718-3722

- Shadow detection and removal for traffic images. **WANG J M et al.** NETWORKING, SENSING AND CONTROL, 2004 IEEE INTERNATIONAL CONFERENCE ON TAIPEI, TAIWAN. IEEE, 21 March 2004, vol. 1, 649-654